# FASCICULE DE BREVET EUROPEEN

(11) **EP 2 274 866 B1**
(45) Date de publication et mention de la délivrance du brevet: **16.12.2015**
(21) Numéro de dépôt: 09738354.1
(22) Date de dépôt: 21.04.2009
(51) Int. Cl.: G06F 21/62, H04L 9/32, G06F 17/22

(54) **DISPOSITIF INFORMATIQUE DE GESTION TEMPORELLE DE DOCUMENTS NUMERIQUES**
COMPUTERGERÄT FÜR ZEITBASIERTE VERWALTUNG DIGITALER DOKUMENTE
COMPUTER DEVICE FOR THE TIME-BASED MANAGEMENT OF DIGITAL DOCUMENTS

(30) Priorité: 25.04.2008 FR 0802333
(43) Date de publication de la demande: 19.01.2011
(73) Titulaire: Université Paris Diderot - Paris 7, 75205 Paris 13 (FR)
(72) Inventeur: ROUSSEAU, Guillaume, F-75015 Paris (FR)
(74) Mandataire: Cabinet Netter
(86) Numéro de dépôt international: PCT/FR2009/000471
(87) Numéro de publication internationale: WO 2009/133320

(56) Documents cités:
- WO-A-92/03000
- WO-A-03/021405
- US-A1- 2003 159 048
- US-A1- 2005 038 787
- US-A1- 2007 168 671
- US-B1- 6 418 457

## Description

L'invention a trait à un dispositif de gestion temporelle de documents numériques.

Les documents de type numériques peuvent présenter des contenus divers, tels que de la musique, du texte, des images, de la vidéo, ou encore du code source.

Il arrive qu'on veuille établir une comparaison de documents numériques, en particulier par rapport à leur contenu.

Dans le cas où deux documents numériques sont mémorisés sous la forme de deux fichiers informatiques distincts, de multiples comparaisons peuvent être effectuées, plus ou moins directement.

La plupart des interfaces graphiques des systèmes d'exploitation actuels indiquent par exemple la quantité de mémoire nécessaire au stockage d'un fichier particulier. Ces interfaces graphiques affichent également des dates de dernière modification, de création, et/ou de dernier accès, telles que stockées dans le fichier lui-même.

Il s'agit là d'une comparaison grossière et peu fiable : deux documents aux contenus différents peuvent avoir été créés à une même date et présenter des tailles égales.

Des comparaisons plus fiables peuvent être faites en comparant deux fichiers informatiques octet par octet. De nombreux outils informatiques du commerce offrent cette possibilité.

Cependant, il s'agit là d'une comparaison de fichiers informatiques entre eux, et non d'une comparaison de leurs contenus : ces outils se contentent le plus souvent d'établir si les fichiers informatiques comparés sont identiques ou non.

Par exemple, lorsque les fichiers de deux documents issus de logiciels de traitement de texte différents, ou de deux versions différentes d'un même logiciel de traitement de texte, sont comparés, ces outils indiquent pratiquement dans tous les cas que ces fichiers sont différents. Pourtant, le texte contenu dans ces fichiers peut être identique, y compris en ce qui concerne sa mise en forme.

Certains logiciels permettent une comparaison du contenu de documents. C'est le cas par exemple de la plupart des logiciels de traitement de texte actuels.

Les possibilités de comparaison offertes par ces logiciels ne sont cependant pas satisfaisantes.

La comparaison est en général limitée au cas où les fichiers correspondants ont été générés par le logiciel en question.

Elle est ensuite essentiellement manuelle, en sorte qu'elle devient vite fastidieuse lorsqu'il s'agit de comparer de multiples documents entre eux.

Elle est encore limitée au cas de deux fichiers informatiques, et devient inopérante lorsqu'un contenu, c'est-à-dire du texte, est physiquement réparti sur plusieurs fichiers informatiques distincts.

En outre, la comparaison est opérée sur l'ensemble du contenu, ce qui engendre un traitement assez long dans le cas de documents de taille importante et/ou de multiples comparaisons de documents deux à deux.

De plus, le résultat d'une telle comparaison se limite à une mise en évidence des différences, ou des similarités, de contenu sans autre information pertinente quant à ce contenu.

Enfin, ces logiciels ne permettent pas une comparaison confidentielle des documents : deux auteurs qui voudraient comparer leurs textes respectifs seraient obligés de se montrer ces derniers, ou, à tout le moins, de le faire voir à un tiers.

Autrement dit, la comparaison de fichiers textes, telle qu'elle est offerte par les logiciels de traitement de texte du marché, impose une divulgation du contenu des documents. Et ceci peut être inacceptable, par exemple lorsque les documents en question concernent une oeuvre littéraire ou une partie d'un programme informatique.

Par ailleurs, il existe des dispositifs capables de réaliser des comparaisons de manière confidentielle. Par exemple, un dépôt auprès de l'IDDN permet d'obtenir une clé chiffrée unique, générée à partir d'un ou plusieurs fichiers correspondant à un contenu. Le cas échéant, cette clé peut être comparée à une autre clé. L'opération de comparaison des documents se limite alors à la comparaison de courtes chaînes de caractères.

Ces dispositifs ne sont pas non plus satisfaisants.

D'abord, ils se contentent de conclure à l'identité de deux documents ou à leur différence, indépendamment de l'ampleur ou de la nature de cette différence. Typiquement, un simple remplacement des marques de séparation de colonnes dans un fichier texte, de tabulations en virgules par exemple, suffit à générer des chaînes de caractères différentes.

Ensuite, les dispositifs de ce type ne permettent pas de s'intéresser à une partie seulement du contenu d'un document, ou plus généralement de s'intéresser à un document autrement que dans son ensemble. Par exemple, dans le cas où un document comprendrait tout ou partie du contenu d'un autre document, le traitement par les dispositifs de ce type se limiterait à conclure à une différence des deux documents comparés. Or, il peut être souhaitable d'identifier une telle incorporation de contenu, en particulier lorsqu'il s'agit de revendiquer une partie de la propriété d'un document.

Enfin, la comparaison de chaînes de caractères impose que celles-ci aient été générées au moyen du même algorithme, ou à tout le moins d'algorithmes analogues, dans le sens où ces algorithmes doivent générer des signatures communes ou compatibles. Sinon, il n'est pas possible de conclure à une différence de contenus à partir d'une différence de clés.

Or, au fil du temps, l'algorithme de chiffrement peut avoir été modifié, à multiples reprises.

Plus généralement, lorsqu'il s'agit de revendiquer une forme quelconque de propriété sur tout ou partie d'un document, il est nécessaire de comparer ces documents, en particulier quant à leur contenu, et d'obtenir des éléments de datation des contenus comparés.

Par exemple, si l'on souhaite revendiquer une partie de la création d'un logiciel, il est nécessaire de posséder le contenu correspondant du code source, la clé générée à partir de ce contenu et un élément de date prouvant notamment que ce contenu n'a pas été généré a posteriori, à partir du logiciel compilé.

Il existe de nombreuses personnes, physiques ou morales, agissant en tant que tiers certificateurs. Ces personnes mettent en oeuvre des procédés consistant de manière générique à générer une archive à partir d'un ou plusieurs documents, à créer une clé unique à partir du contenu de ce document, et à attribuer à cette clé un élément d'horodatage, le plus souvent sous la forme d'un jeton, en rapport avec la date et l'heure auxquelles a été réalisé ledit procédé.

Le document US 2007/168671 décrit un programme de gestion de documents numériques apte à réaliser une certification de tiers d'information de document avec un nombre réduit de métadonnées. Lors de l'enregistrement d'une nouvelle information de document, le programme de gestion de documents numériques supervise une signature numérique créée en association avec l'information de document. Lors d'une correction de l'information de document, le programme acquiert une information d'identification partielle relative à une portion corrigée de l'information de document avant correction, crée une signature numérique à annexer à l'information de document corrigée, et supervise la signature numérique et l'information d'identification partielle relative à la portion corrigée de l'information de document en association avec l'information de document corrigée. Lors d'une vérification, le programme utilise une information d'identification partielle, l'information d'identification partielle correspondant à une portion corrigée de l'information de document avant correction, et une signature numérique pour réaliser la vérification.

Là aussi, la façon dont est générée une archive à partir d'un ou plusieurs documents, l'algorithme utilisé pour générer la clé à partir de ladite archive et le procédé mis en oeuvre pour établir un jeton et la certification de ce jeton peuvent être amenés à changer au cours du temps.

Dans certain cas, ceci rend particulièrement délicat la revendication d'une quelconque propriété lorsqu'il s'agit de remonter à des politiques pouvant parfois dater de plusieurs années.

On se propose d'améliorer la situation.

L'invention vise un dispositif informatique de gestion temporelle de documents numériques du type comprenant une mémoire capable de stocker au moins un document numérique et une empreinte datée respective, ladite empreinte datée définissant une correspondance entre une ou plusieurs premières valeurs de signatures et au moins une valeur de temporalité, ces premières valeurs de signatures étant établies à partir de ce document numérique, conformément à une première méthode de signature, un générateur de signatures capable, sur présentation d'un contenu de document, d'établir une ou plusieurs secondes valeurs de signatures respectives, conformément à une seconde méthode de signature, un horodateur, comprenant une fonction d'élection de temporalité, capable d'établir une correspondance entre une ou plusieurs valeurs de signature et une valeur-résultat de la fonction d'élection de temporalité, un vérificateur de signatures capable, sur présentation d'un contenu de document numérique et d'une empreinte datée, d'en vérifier la conformité mutuelle selon une ou plusieurs règles prédéterminées, un superviseur capable, sur présentation du document numérique et de son empreinte datée, de réaliser un traitement particulier. Ce traitement particulier consiste à faire opérer le générateur de signatures sur le document numérique pour obtenir une ou plusieurs secondes valeurs de signatures, à faire opérer le vérificateur de signatures sur le document numérique et l'empreinte datée, et, dans le cas où le document numérique est conforme à l'empreinte datée, à faire opérer l'horodateur avec au moins la valeur de temporalité du document numérique et certaines au moins des secondes valeurs de signatures afin de former une nouvelle empreinte datée comprenant de secondes valeurs de signatures.

Le dispositif selon l'invention permet de comparer des empreintes de documents, constituées de signatures, au lieu de comparer les documents eux-mêmes. Il en résulte d'abord une comparaison rapide et peu coûteuse en temps et en ressources de calcul. Incidemment cette comparaison n'est pas limitée à une comparaison de documents deux à deux. Il en découle ensuite une comparaison plus fine, en ce que plusieurs signatures peuvent être générées à partir d'un même document.

Le dispositif selon l'invention permet également de comparer des documents dont les empreintes ont été générées conformément à des méthodes de signature différentes. Ceci peut être fait en conservant le bénéfice de la date attribuée à une empreinte établie conformément à une ancienne méthode de signature, et ceci avec un niveau de confiance important.

Le dispositif selon l'invention permet de mettre en oeuvre une comparaison en terme d'identité ou de différence des contenus des documents. Mais ce dispositif permet surtout d'introduire un facteur temporel dans cette comparaison. Autrement dit, il devient possible de dater les éléments communs ou les éléments par lesquels des documents diffèrent mutuellement. En particulier, des intégrations de portions de contenus d'un document dans un autre peuvent être mises en évidence. Dans ce cas, il est également possible d'identifier un document d'origine et un document de destination, par comparaison des dates associées aux empreintes.

D'autres caractéristiques et avantages de l'invention apparaîtront à l'examen de la description détaillée ci-après, et des dessins annexés sur lesquels :
- La figure 1 est un schéma fonctionnel d'un dispositif selon l'invention.
- La figure 2 est un organigramme illustrant le fonctionnement d'un contrôleur pour le dispositif de la figure 1.
- La figure 3 est un organigramme illustrant le fonctionnement d'un générateur de signatures pour le dispositif de la figure 1, dans un premier mode de réalisation.
- La figure 4 est un tableau illustrant une empreinte temporalisée générée à l'aide du générateur de signatures illustré par la figure 3.
- La figure 5 est un organigramme illustrant le fonctionnement du générateur de signatures pour le dispositif de la figure 1, dans un troisième mode de réalisation.
- La figure 6 est un tableau illustrant une empreinte temporalisée générée à l'aide du générateur de signatures illustré par la figure 5.
- La figure 7 est un organigramme illustrant une variante de fonctionnement du contrôleur de la figure 1, le générateur de signatures étant conforme à son troisième mode de réalisation.
- La figure 8 est un organigramme illustrant le fonctionnement d'un horodateur pour le dispositif de la figure 1.
- La figure 9 est analogue à la figure 6, dans la variante de fonctionnement de la figure 7.
- La figure 10 est analogue à la figure 6, dans une autre variante de fonctionnement du contrôleur de la figure 1.
- La figure 11 est un tableau illustrant des empreintes temporelles générées à l'aide du générateur de signatures selon les premier et troisième modes de réalisation.
- La figure 12 est un organigramme illustrant un détail du fonctionnement du contrôleur de la figure 1.
- La figure 13 est un organigramme illustrant un autre détail du fonctionnement du contrôleur de la figure 1.
- La figure 14 est un tableau illustrant une empreinte temporalisée, générée à l'aide du contrôleur de la figure 1 fonctionnant conformément à la figure 13.
- La figure 15 est analogue à la figure 14 pour une variante de réalisation.
- La figure 16 est analogue à la figure 14 pour une autre variante de réalisation encore.
- La figure 17 est un organigramme illustrant le fonctionnement d'un générateur de signatures pour le dispositif de la figure 1 selon un autre mode de réalisation.
- La figure 18 est un diagramme illustrant également le fonctionnement du générateur de signatures dans le mode de réalisation de la figure 17.

Les dessins annexés pourront non seulement servir à compléter l'invention, mais aussi contribuer à sa définition, le cas échéant.

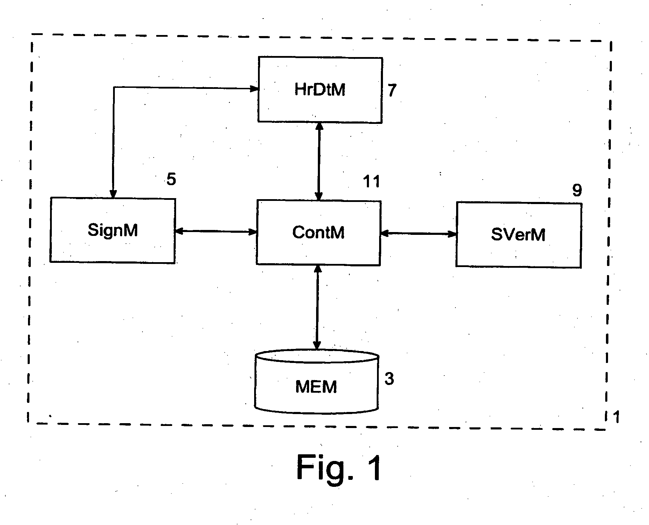

La figure 1 représente un dispositif informatique 1 selon l'invention pour une gestion temporelle de documents numériques.

Par document numérique, on entend ici tout ensemble cohérent de contenu sous forme numérique.

Un document numérique peut correspondre à un ou plusieurs fichiers informatiques, de type quelconque. Un fichier audio, un fichier vidéo et plus généralement tous fichiers multimédia, en format brut ou compressé selon un standard, sont des exemples de documents numériques, pour lesquels le dispositif informatique 1 peut être employé.

Les fichiers de type texte, qu'ils soient dans un format propre au logiciel ayant permis leur génération ou dans l'un des formats de fichier texte standardisés, constituent d'autres exemples de documents numériques.

Parmi ces fichiers de type texte, l'invention trouve un intérêt particulier avec les fichiers dits "sources", c'est-à-dire comprenant une série d'instructions en un langage de programmation quelconque, destinées à être compilées en instructions exécutables par une machine de calcul, typiquement un ordinateur.

L'invention n'est cependant pas limitée à cette application particulière.

Plus généralement, le dispositif informatique 1 trouve un usage avantageux sur tout document numérique dont le contenu est susceptible de revêtir une forme quelconque de création, par exemple telle que régie par les dispositions légales sur le droit d'auteur.

En particulier, le dispositif informatique 1 se révèle tout à fait efficace lorsqu'il s'agit de revendiquer tout ou partie de la propriété d'un document, ce qui implique à un moment ou à un autre d'établir une forme de dépendance entre deux documents, ceci nécessitant notamment une robustesse du dispositif informatique aux évolutions qui peuvent survenir au cours du temps.

Encore plus généralement, le dispositif informatique 1 peut être avantageusement appliqué à chaque fois qu'il existe un intérêt quelconque à obtenir des informations fiables, en particulier de dates, relatives au contenu d'un document numérique.

Dans la suite de la présente description, à chaque fois qu'il sera fait référence à un document numérique, il conviendra de considérer que ce document peut être physiquement constitué de plusieurs fichiers informatiques. Exceptionnellement, certaines mises en oeuvre particulières de l'invention pourront nécessiter qu'un document numérique individuel corresponde à un unique fichier informatique. Cela sera alors clairement indiqué.

Par exemple, il sera régulièrement fait référence à un document numérique dans le cas d'un ensemble de fichiers informatiques de type "code source", constituant une version d'un logiciel ou plus généralement une étape dans un projet en développement. Dans ce cas, deux documents distincts pourront être vus comme deux versions distinctes du projet.

Le terme "contenu" du document n'est pas nécessairement sans rapport avec le ou les fichiers informatiques qui le contiennent ou plus généralement son ou ses conteneurs. Le contenu du document peut ainsi comprendre sa structure de stockage sous forme numérique, ou un ou plusieurs attributs de son conteneur. Le contenu d'un fichier informatique pourra comprendre le nom attribué à ce fichier informatique, en particulier dans le cas où le nom de ce fichier est fortement lié au reste du contenu du document, par exemple lorsque le nom du fichier résulte d'une convention d'établissement de nom prenant en compte, par exemple, la date de génération dudit fichier. Le contenu du document peut également comprendre une structure hiérarchisée complexe. Par exemple, un fichier peut comprendre une archive, laquelle comprend des répertoires et une structure hiérarchisée de stockage, le tout formant, par exemple, un projet de développement de logiciel informatique. Le contenu de ce fichier-archive comprend non seulement l'ensemble des codes-sources, mais également toute la structure hiérarchisée du stockage de ces sources.

La présente convention peut paraître contraire au langage informatique usuel, dans lequel le sens du mot "document" résulte principalement de l'utilisation de ce mot dans l'interface graphique de certains systèmes d'exploitation.

Pourtant, l'acception du mot "document" dans le langage courant est bien plus large et correspond tout-à-fait à la présente convention. D'autre part, il apparaît assez clairement que le découpage d'un document numérique en un ou plusieurs fichiers informatiques répond le plus souvent à un choix arbitraire, auquel le dispositif selon l'invention est pratiquement insensible.

Dans certains cas, un document numérique pourra correspondre à une partie seulement d'un fichier informatique.

Le dispositif informatique 1 comprend une mémoire de stockage 3 capable, entre autres choses, de conserver des documents numériques, un générateur de signatures 5 capable, sur présentation d'un document numérique, d'établir une ou plusieurs signatures représentatives du contenu de ce document, un horodateur 7 capable d'associer une référence temporelle à chaque signature qui lui est présentée selon des règles déterminées d'horodatage, et un vérificateur de signatures 9 capable de vérifier la conformité d'un contenu de document à une ou plusieurs signatures relatives à celui-ci.

La mémoire 3 peut être organisée à la manière d'une base de donnée, par exemple de type relationnelle. Elle peut être mise en oeuvre avec tous types de systèmes de fichiers, tels que FAT, NTFS, et sous tous systèmes d'exploitation, y compris Unix.

Le dispositif informatique 1 comprend en outre un contrôleur 11, ou superviseur, capable d'interagir avec le générateur de signatures 5, l'horodateur 7, le vérificateur de signature 9 et la mémoire 3.

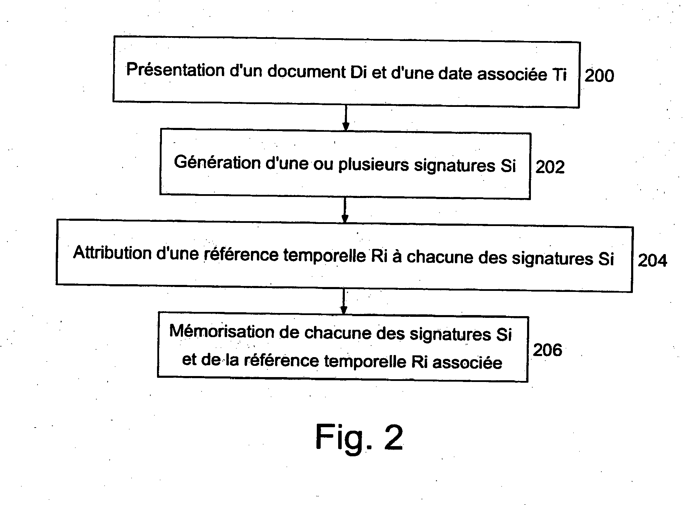

La figure 2 illustre le fonctionnement du contrôleur 11.

Un document numérique Di et une donnée de date associée Ti sont présentés au contrôleur 11 au cours d'une étape 200. La date Ti associée au document Di est de préférence une date en rapport avec la création de ce document. En pratique, la date Ti peut être obtenue de différentes manières. Lorsque le document Di correspond à un projet, la date Ti peut provenir d'un serveur de stockage de sources, d'un outils de gestion de sources tel que CVS (pour "Concurrent Version System" ou système de versions concurrentes), ou plus simplement correspondre à une date de création du fichier informatique le plus récent/le plus ancien. Dans le cas d'un unique fichier, cette date Ti peut être la date de création, telle que mémorisée à l'intérieur du fichier lui-même, une date certifiée par un tiers, ou encore une date de création de contenu, en particulier lorsque celui-ci est antérieur à la date du fichier informatique.

Dans une étape 202, le contrôleur 11 présente le document Di au générateur de signatures 5, lequel renvoie une ou plusieurs signatures Si représentatives du contenu du document Di.

Avantageusement, la signature est statistiquement unique mais cohérente avec le contenu du document Di. On entend par là que la probabilité que deux contenus distincts provoquent la génération de deux signatures identiques en valeur est aussi réduite que possible, tout en assurant que deux contenus identiques provoquent une même valeur de signature.

Pour chacune des signatures Si générées à l'étape 202, le contrôleur 11 appelle l'horodateur 7, lequel associe au moins une référence de temporalité Ri à une valeur de signature, au cours d'une étape 204.

Par référence de temporalité, on entend ici une donnée qui a trait à une information de date, relative ou absolue, quant à la valeur de signature en question, et plus précisément au contenu qui a permis de générer cette signature. Une référence de temporalité Ri peut prendre, de manière non limitative, la forme d'une date ou d'une correspondance à une date.

Par exemple, une référence de temporalité Ri peut prendre la forme d'un identifiant de version dans une suite organisée de documents. Dans certains cas, une référence de temporalité Ri peut faire référence à une autre référence de temporalité, le cas échéant avec une information complémentaire, telle que "plus ancienne" ou "plus récente".

Le contrôleur 11 interagit ensuite avec la mémoire 3 pour y stocker, pour le document Di, l'ensemble des signatures Si générées et leur référence de temporalité, en correspondance mutuelle.

Cette correspondance entre un document Di, l'ensemble des signatures Si générées à partir de son contenu et les références de temporalités Ri associées auxdites signatures Si est ici désigné "empreinte temporalisée du document Di".

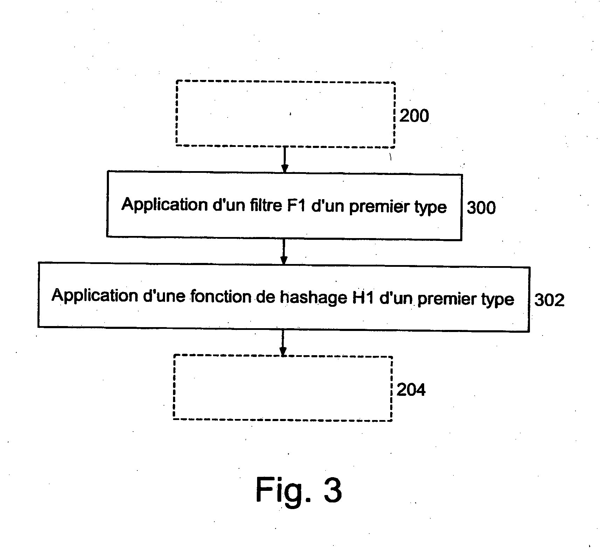

La figure 3 illustre un premier mode de réalisation du générateur de signatures 5.

Dans ce mode de réalisation, une unique signature Si est générée à partir d'un document Di.

Le générateur de signatures 3 est agencé de manière à appliquer une fonction filtre F1 d'un premier type au document Di, au cours d'une étape 300.

La fonction filtre F1 est principalement agencée de manière que la signature Si générée pour le document Di soit robuste à tout changement minime.

On entend par là que la signature générée à partir du contenu du document Di filtré doit être identique à une signature générée à partir d'un document dont le contenu est estimé sensiblement identique à celui du document Di.

La notion de "changement minime" ou "d'identité des contenus" dépend en grande partie du type de document traité et de conventions adoptées.

Dans le cas d'un fichier de type source, il peut être convenu qu'une mise en forme du contenu du document ne constitue qu'un changement minime. La fonction filtre F1 peut alors être agencée en conséquence et, par exemple, appliquer une mise en forme prédéterminée au contenu avant génération de la signature. En variante, la fonction filtre F1 peut être agencée de manière à supprimer toute mise en forme.

La fonction filtre F1 peut également être agencée de manière à supprimer tous commentaires du fichier de type source, et/ou caractères étrangers à la sémantique du langage de programmation, et/ou caractères dépendants d'un système d'exploitation particulier, dans le cas où il est convenu que l'insertion de tels éléments ne modifie pas de manière significative le contenu du document Di.

La fonction filtre F1 peut encore être agencée de manière à renommer suivant une convention préétablie l'ensemble des variables et des fonctions décrites dans le fichier de type source, en sorte que la génération de signatures deviendra robuste à une opération de renommage de ces éléments.

D'autres exemples de modifications qui peuvent être jugées non significatives sont :
- des modifications concernant uniquement la mise en forme du contenu du document, telle que l'ajout de caractères d'espacement ou de lignes vierges dans un fichier de type texte,
- la simple réécriture du contenu, telle que le changement des noms de variables ou de fonctions, et/ou l'ajout ou la suppression de mentions de "copyright" (droit de copie), et/ou
- la modification du nom d'un ou plusieurs fichiers stockant le contenu, et plus généralement toutes modifications dans la structure de stockage de ce document telles que subdivision en un ou plusieurs fichiers, noms des répertoires de stockage de ces fichiers, arborescence des répertoires et analogues.

Le cas échéant, la fonction filtre F1 peut être adaptée au type du document Di et/ou du système d'exploitation sur lequel ce document Di a été généré. Des fonctions filtre F1 différentes peuvent être prévues lorsqu'il s'agit de générer une signature représentative du contenu d'un document musical, vidéo ou d'image.

L'application de la fonction filtre F1 est avantageuse en ce qu'elle améliore la robustesse des signatures générées. Cette application reste optionnelle.

Le générateur de signatures 5 est en outre agencé de manière à appliquer une fonction de hashage H1 d'un premier type au contenu du document Di, après application éventuelle de la fonction filtre F1. La fonction de hashage H1 retourne une signature Si, statistiquement unique, représentative du contenu du document Di. En pratique, une telle signature peut prendre la forme d'une chaîne de caractères alphanumériques, d'autres formes pouvant être envisagées.

La fonction de hashage H1 peut être réalisée de différentes façons.

Par exemple, cette fonction de hashage H1 peut mettre en oeuvre les algorithmes de cryptage MD5, SHA-1 ou SHA-256, et analogues.

Plus généralement, toute fonction capable d'établir à partir d'un contenu de document un identifiant en rapport avec ce contenu peut être utilisée en tant que fonction de hashage H1.

Avantageusement, on préférera des fonctions de hashage H1 telles, que la signature générée soit unique, ou plus exactement statistiquement unique. Ceci permet ultérieurement de comparer des signatures associées à des documents plutôt que le contenu de ces documents. Il en découle un gain de temps de calcul considérable.

En pratique, des fonctions dites "irréversibles" ou "inviolables", telles que les fonctions établies sur la base d'algorithmes de cryptage, seront avantageusement utilisées.

Les fonctions de hashage H1 possibles ne sont pas limitées aux seules fonctions de type cryptographique. Les fonctions susceptibles de donner d'autres informations pertinentes quant au contenu d'un document, telles que sa proximité en terme de contenu à d'autres documents selon des conventions préétablies, peuvent être utilisées. De telles fonctions ne divulguent pas en effet le contenu du document, mais uniquement une certaine "proximité" à un autre document.

De telles fonctions permettent non seulement d'obtenir un identifiant numérique statistiquement unique, mais encore d'éviter que le contenu du document Di, ou un équivalent significatif de ce contenu, soit retrouvé à partir de sa signature, du moins dans la mesure d'efforts raisonnables. L'emploi de telles fonctions autorise une large diffusion des signatures générées, avec un risque minime de divulgation des contenus. Ces derniers peuvent en effet revêtir un certain savoir-faire, en particulier lorsqu'il s'agit de fichiers de programmation.

Dans certains cas, il pourra cependant être préféré de ne divulguer qu'une partie des signatures générées, que certaines d'entre elles, par exemple les signatures générées à partir de contenus d'une taille supérieure à un seuil donné, et/ou que certains des attributs associés à une signature.

Il peut ainsi être mis en place ce l'on pourrait appeler une "politique de divulgation". Ceci peut être le cas en particulier lorsqu'un ensemble de documents constitue des versions successives d'un logiciel en développement. Dans ce cas en effet, la divulgation successive des signatures générées à partir de chacune des versions tend à fournir des informations supplémentaires, en sorte que les algorithmes de hashage et les fonctions filtre en deviennent, en termes de probabilité, nécessairement moins fiables. Ceci est tout particulièrement vrai dans les cas où, comme on le verra plus loin, on génère non pas une mais une pluralité de signatures à partir d'un même document, car, ce faisant, on multiplie les informations reliant les signatures entre elles. Plus la taille du contenu à partir duquel une signature a été générée est petite, moins sont robustes les fonctions filtre et de hashage utilisées aux attaques directes, c'est-à-dire visant à retrouver le contenu en question à partir de la signature par essais successifs. Toute indication de liaison entre les contenus dégrade également cette robustesse, car elle limite les essais nécessaires.

Selon une première variante du premier mode de réalisation, l'horodateur 7 est agencé de manière à attribuer à la signature Si sa date de génération en tant que référence de temporalité Ri. Cette date de génération peut être obtenue du système d'exploitation, éventuellement corroborée par un serveur de temps, et peut prendre la forme d'un jeton d'horodatage.

Selon une seconde variante de ce premier mode de réalisation, l'horodateur 7 est agencé de manière à attribuer à la signature Si la date Ti associée au document Di en tant que référence de temporalité Ri. Cette attribution peut être conditionnée par l'obtention d'un élément probant accréditant cette date Ti, par exemple une déclaration d'un tiers certificateur, ou d'un jeton d'horodatage.

Selon une troisième variante de ce premier mode de réalisation, l'horodateur 7 est agencé de manière à attribuer à la signature Si la date Ti associée au document Di, si et seulement si cette date Ti est associée à un niveau de confiance acceptable, et à attribuer la date de génération de signature dans le cas contraire.

Quelque soit la variante de réalisation, l'horodateur 7 peut être agencé de manière à en outre appeler une fonction d'élection de temporalité pour la valeur de signature Si.

La fonction d'élection de temporalité peut être agencée de manière à vérifier l'existence de la signature Si dans la mémoire 3, et, dans le cas où cette signature existe, à attribuer en tant que référence de temporalité Ri, l'une de la nouvelle référence de temporalité Ri et de la référence temporelle déjà mémorisée. Par exemple, la plus ancienne de ces deux références de temporalité peut être attribuée à la signature Si. Ceci permet notamment de mettre en évidence une date de première apparition de la signature Si dans un ensemble de documents. Cette date de première apparition peut servir de base à l'identification d'intégration de contenu d'un document dans un autre.

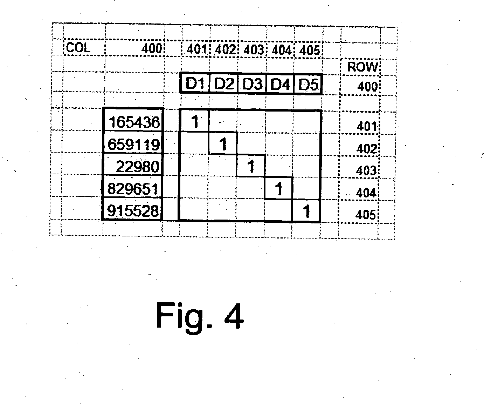

La figure 4 illustre les empreintes temporalisées de documents D1 à D5 obtenue à l'aide du générateur de signatures 5 dans son premier mode de réalisation.

Les différentes signatures sont indiquées en colonne COL400 et les identifiants des différents documents en ligne ROW400. La correspondance entre une signature et un document particulier est indiquée par la présence d'un chiffre "1" encadré.

Par exemple, l'empreinte temporalisée du document D1 comprend la signature "165436" (présence du chiffre "1" dans la case COL401,ROW401).

Ici, les références temporelles Ri associées aux signatures Si ont été déterminées au moyen de la date Ti associée à chacun des documents Di. Autrement dit, la valeur de la référence temporelle Ri n'est pas ici indiquée explicitement sur la figure, mais la correspondance entre une signature Si et cette référence temporelle Ri se déduit de la présence d'un chiffre "1".

Ceci peut être vu également comme l'attribution d'un numéro de document en tant que référence temporelle Ri, les documents Di ayant été numérotés chronologiquement, par exemple ici à partir des dates Ti qui leur ont été associées.

Ceci montre que la référence temporelle Ri ne prend pas nécessairement la forme d'une date. Dans certains cas, comme ici, la référence temporelle peut être relative.

La signature "165436" bénéficie de la date associée au document D1, le plus ancien des documents Di, tandis que la signature "915528" bénéficie de la date du document D5, le plus récent des documents Di.

La mémoire 3 est agencée de manière à maintenir pour chaque document Di, ici les documents D1 à D5, la signature Si générée et la référence temporelle Ri associée à cette valeur de signature. Le cas échéant, la mémoire 3 peut être organisée de manière à maintenir une correspondance entre plusieurs documents, ici par exemple un lien est maintenu entre les empreintes des documents D1 à D5.

Dans un second mode de réalisation du générateur de signatures 5, la génération d'empreintes temporalisées à partir de document Di est réalisée hors du dispositif informatique 1.

Le générateur de signature 5 est agencé de manière à récupérer au minimum un identifiant de document Di, une signature Si générée à partir du document Di, et une date associée à cette signature Si.

Plusieurs documents peuvent être reçus simultanément. La mémoire 3 peut alors être agencée de manière à conserver les empreintes temporelles d'un ensemble de documents Di liés entre eux.

En option, le module horodateur 7 peut appeler une fonction d'élection de temporalité pour chacune des signatures Si afin d'établir une nouvelle référence de temporalité Ri à partir de références de temporalité associées à cette signature Si dans la mémoire 3.

Dans une première variante de ce second mode de réalisation, la date associée à la signature Si est considérée comme étant a priori valable. Ceci correspond à un niveau de confiance en la justesse de la date associée à la signature Si assez faible. Ceci présente néanmoins l'avantage d'une mise en oeuvre assez simple du dispositif.

Dans une seconde variante de réalisation, le générateur de signatures 5 est agencé de manière à vérifier la validité de la date associée à la valeur de signature Si. Par exemple, le générateur de signatures 5 peut être agencé de manière à recevoir un jeton d'horodatage provenant d'un tiers horodateur fournissant des formes de stockage de confiance.

Dans ce cas, un jeton d'horodatage peut être associé de manière unique à la signature Si, une date étant attribuée à ce jeton. Lorsque la validité du jeton est vérifiée, on obtient un niveau de confiance dans l'association de la signature et de la date semblable au niveau de confiance accordé à l'émetteur dudit jeton. De multiples procédures de vérification existent, lesquelles procédures dépendent essentiellement de l'émetteur du jeton. Par exemple, le jeton, et éventuellement une date et/ou la signature Si, peuvent être présentés à un service tiers pour certification de l'association de la date et de la signature. Dans d'autres cas, l'émetteur du jeton peut faire connaître une clé publique qui lui est propre, laquelle clé peut être utilisée pour vérifier la consistance du jeton avec la signature Si et une valeur de date. Le jeton n'est pas nécessairement directement accessible au dispositif 1. Dans certains cas, seule une référence à un jeton d'horodatage, conservé auprès du tiers, pourra être accessible.

Des procédures de type différent peuvent également être mises en oeuvre pour vérifier la validité de la date associée à la signature Si.

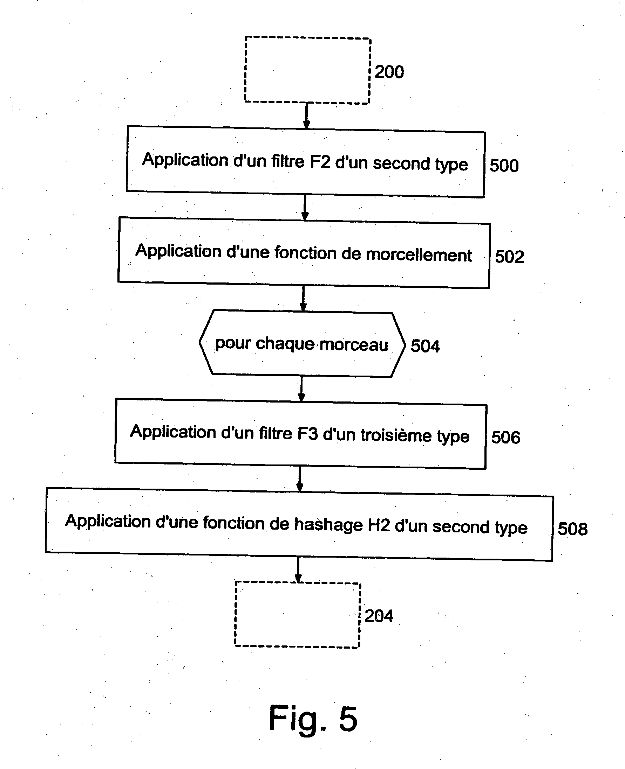

La figure 5 illustre un troisième mode de réalisation du générateur de signatures 5.

Dans ce mode de réalisation, plusieurs signatures Si sont générées à partir d'un document Di. Ceci permet de mettre en oeuvre une comparaison plus fine de documents Di entre eux. Le générateur de signatures 5 est agencé de manière à appliquer un filtre F2 d'un second type à tout document Di qui lui est présenté, au cours d'une étape 500.

Dans une étape 502, le générateur de signature 5 applique au contenu du document Di ainsi filtré une fonction de morcellement, capable d'extraire le contenu du document Di et de le scinder en plusieurs éléments, selon des règles prédéterminées.

La fonction de morcellement, et les règles conformément auxquelles cette fonction agit, peuvent être agencées de différentes manières.

Par exemple, dans le cas d'un fichier de type source, dont le contenu est rédigé selon un langage de programmation particulier, la fonction de morcellement peut être agencée de manière à extraire chacune des fonctions décrites dans le document Di. Les règles de morcellement peuvent alors être établies sur la base d'une recherche d'expressions consacrées à la déclaration des objets de type fonction dans le langage de programmation en question.

Dans le cas où un document est physiquement organisé en plusieurs fichiers informatiques, y compris ayant entre eux des relations complexes, la fonction de morcellement peut être agencée de manière à individualiser ces fichiers informatiques, dans un premier temps au moins.

Étant donné que la notion de "contenu d'un document" est plus générale que les seules informations qu'il est possible d'afficher sur un ordinateur, tel que le texte contenu dans un fichier texte, l'image d'un fichier image ou un film contenu dans un fichier vidéo, la fonction de morcellement peut être agencée de manière à agir sur des éléments non visualisables. Par exemple, la fonction de morcellement peut être agencée de manière à extraire la structure, ou l'arborescence, d'une archive, telle qu'une archive au format TAR.GZ par exemple, et plus généralement sur la structure de stockage du contenu d'un document numérique. La fonction de morcellement peut en outre être agencée de manière à agir sur des éléments de taille, ou "de granularité" différentes. Par exemple, dans le cas où un document Di représente un ensemble de fichiers sources, la fonction de morcellement peut être agencée de manière à d'abord découper les documents en fichiers, représentant ainsi un premier niveau de granularité, et ensuite à découper ledit fichier en fonctions. Autrement dit, le résultat de la fonction de morcellement appliquée au document Di a pour résultat un ensemble de fichiers et un ensemble de fonctions contenues dans ces fichiers. Autrement dit, il sera généré pour un fichier informatique une signature correspondante à ce fichier et une signature pour chacune des fonctions contenues dans ce fichier.

La fonction de morcellement peut ainsi être agencée de manière à découper plusieurs fois et de différentes manières un document Di, de manière non successive, chacune des opérations de découpe fournissant un ensemble d'éléments à signer.

Dans une étape 504, le générateur de signatures 5 débute une boucle sur chacune des parties du contenu du document Di issues de l'étape 502.

Cette boucle débute par l'application d'une fonction filtre F3 d'un troisième type, au cours d'une étape 506, et se poursuit par l'application d'une fonction de hashage H2 d'un second type, au cours d'une étape 508.

La fonction filtre F2 vise avant tout à rendre le résultat de la fonction de morcellement le plus robuste possible. Autrement dit, cette fonction filtre F2 est agencée de manière que deux documents composés de manière semblable soient découpés de la même manière. Aussi la fonction filtre F2 peut-elle être établie en rapport avec la fonction de morcellement.

Dans le cas de fichiers de type sources, la fonction filtre F2 peut être agencée de manière à mettre en forme le contenu du document, conformément à une convention de présentation, tandis que la fonction de morcellement est agencée de manière à découper en fonction de la présentation en question.

Pour l'essentiel, la fonction filtre F3 répond à des impétra tifs analogues à ceux de la fonction filtre F1, en particulier concernant la robustesse des signatures générées.

La fonction filtre F3 peut être adaptée en fonction du type de contenu de la partie découpée : des filtres différents peuvent être mis en oeuvre suivant que les parties découpées correspondent à des fonctions, des données, des parties d'images ou de pièces musicales.

Il est fait référence ici à une unique fonction de hashage H2 aux seules fins de simplification. En pratique, plusieurs fonctions de hashage différentes pourront être mises en oeuvre, celles-ci pouvant, par exemple, être adaptées selon le contenu de la partie à traiter.

Selon une première variante de ce troisième mode de réalisation, l'horodateur 7 est agencé de manière à associer la date Ti associée au document Di en tant que référence de temporalité Ri à chacune des signatures Si générées pour ce document Di, dans un premier temps au moins.

Ceci peut être fait au moyen d'une fonction d'élection de temporalité qui établit la date Ti en tant que référence temporelle. Dans certains cas, la date Ti peut être assortie d'une donnée d'indice de confiance. La fonction d'élection de temporalité peut alors être agencée de manière à établir la date Ti en tant que référence de temporalité Ri uniquement si cet indice de confiance dépasse un certain seuil prédéterminé. Sinon, la date à laquelle le traitement est réalisé peut être utilisée en tant que référence de temporalité Ri.

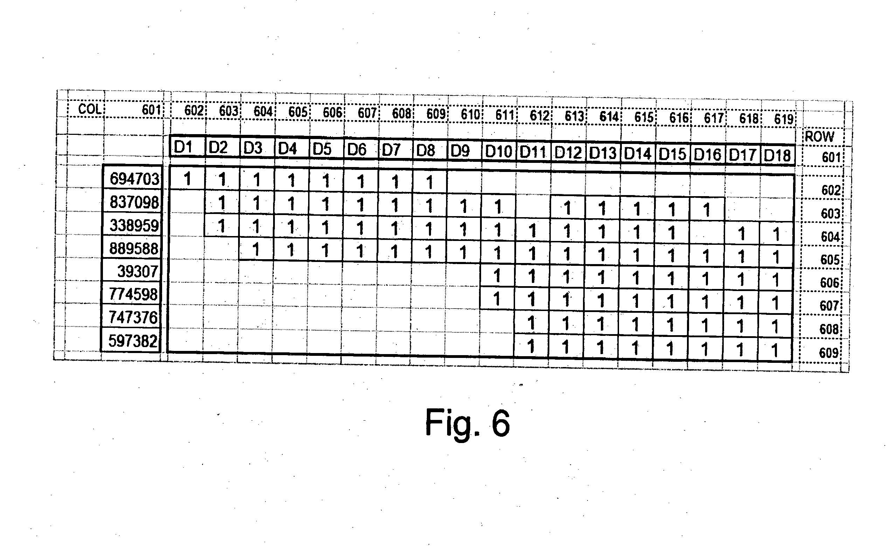

La figure 6 illustre les empreintes temporalisées de documents D1 à D18 établies à l'aide du générateur de signatures 5 dans la première variante du troisième mode de réalisation.

Par exemple, l'empreinte du document D4, représentée par la colonne COL605, est constituée des valeurs de signature "694703", "837098", "338959" et "889588", comme l'indique la présence de l'élément chiffré "1" encadré dans cette colonne.

Dans cette réalisation, chacune des signatures de D4 a pour référence temporelle la date T4 correspondant au document D4.

Plus généralement, chacune des signatures Si générées à partir d'un document Di particulier reçoit dans cette réalisation la date Ti associée à ce document Di en tant que référence de temporalité Ri.

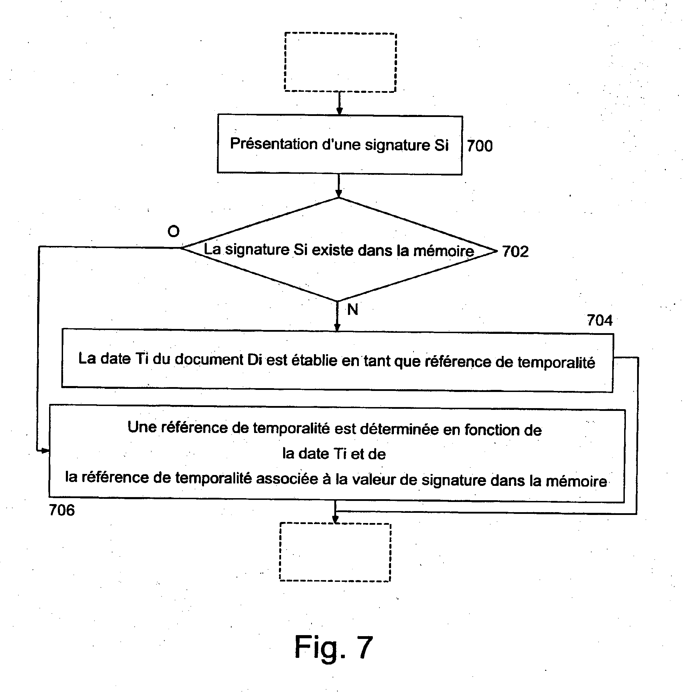

La figure 7 illustre une seconde variante de ce troisième mode de réalisation.

L'horodateur 7 fait ici appel à une fonction d'élection de temporalité pour associer une référence de temporalité Ri à chacune des valeurs de signature Si à partir de signatures stockées dans la mémoire 3.

L'horodateur 7 est agencé de manière à recevoir une valeur de signature Si, relative au contenu d'un document Di, au cours d'une étape 700.

Dans une étape 702, l'horodateur 7 coopère avec la mémoire 3 pour déterminer si la signature Si est déjà stockée dans cette mémoire. En variante, la recherche de la signature Si peut être limitée à des documents Dj dont les empreintes sont mémorisées en rapport avec le document Di en question.

Si oui, alors l'horodateur 7 est agencé de manière à appeler une fonction d'élection temporalité avec l'ensemble des dates associées à ladite signature dans la mémoire 3 et la date Ti associée au document Di, dans une étape 706. La fonction d'élection de temporalité retourne une référence de temporalité Ri, calculée à partir de ces dates, qui sera mémorisée en correspondance avec la signature en question.

Sinon, la date Ti associée au document Di est établie en tant que référence de temporalité Ri de cette signature, au cours d'une étape 706.

Ici, la fonction d'élection de temporalité travaille sur l'ensemble des empreintes temporalisées déjà stockées dans la mémoire 3 pour attribuer aux signatures Si calculées à partir d'un nouveau document Di des références temporelles Ri potentiellement calculées à partir des dates Ti de documents Di déjà traités.

Ceci permet d'établir une empreinte globale pour un ensemble de documents, dans laquelle un ensemble de signatures est recensé, chaque signature ayant une référence de temporalité associée.

Ceci permet également d'actualiser les références temporelles Ri associées aux signatures Si au fur et à mesure que des documents Di sont traités par le dispositif informatique 1. Il devient possible de créer une bibliothèque d'empreintes temporalisées servant à la comparaison d'une pluralité de documents, y compris futurs, sans stocker les documents eux-mêmes.

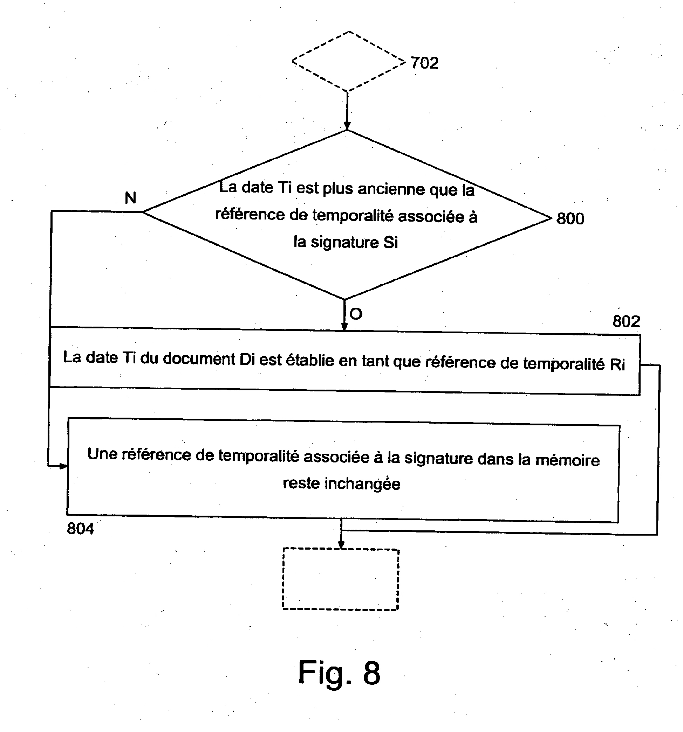

La figure 8 illustre un exemple de réalisation de la fonction d'élection de temporalité.

Dans une étape 800, la fonction d'élection de temporalité vérifie si la date Ti est plus ancienne que la référence de temporalité Ri associée à la signature Si dans la mémoire 3.

Si oui, alors la référence de temporalité Ri prend la valeur de la date Ti associée au document Di, dans une étape 802.

Sinon la référence de temporalité Ri demeure inchangée (étape 804).

Dans ce mode de réalisation, la référence de temporalité Ri est déterminée en tant que plus ancienne date de présence de la signature Si dans l'ensemble des documents Di traités.

Le cas échéant, la fonction d'élection de temporalité peut être agencée de manière à prendre en compte d'autres critères, tels qu'un indice de fiabilité de la date Ti, par exemple.

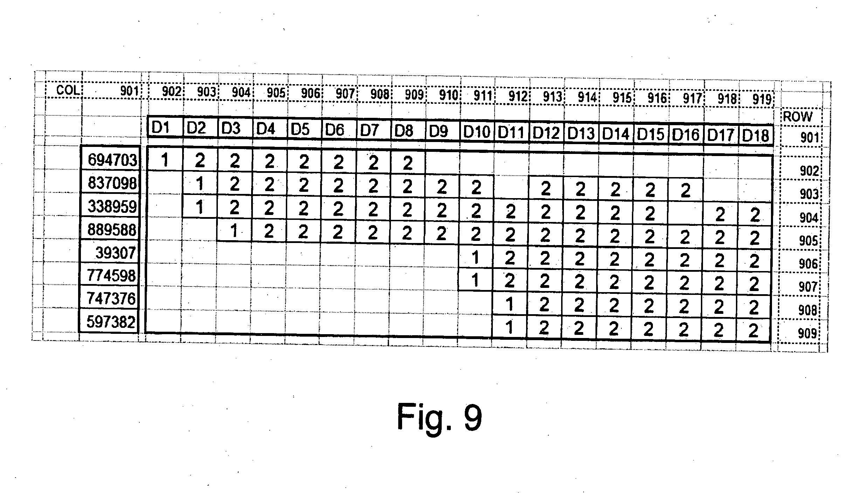

La figure 9 illustre les empreintes temporalisées de documents D1 à D18 établies conformément à la seconde variante du troisième mode de réalisation.

La colonne COL901 rassemble les signatures générées à partir des documents D1 à D18. Ces documents D1 à D18 sont ordonnés chronologiquement dans la ligne ROW901, grâce par exemple à leur date Ti associée.

La présence d'un chiffre encadré à l'intersection d'une colonne correspondant à un document Di et d'une ligne correspondant à une signature indique que le contenu dudit document a conduit à la génération de cette signature.

Par exemple, le document D3 a conduit à la génération des signatures "694703", "837098", "338959", et "889588".

La présence du chiffre "1" en regard d'une signature (COL901) indique la référence de temporalité Ri associée à cette signature : cette référence de temporalité Ri vaut la date Ti du document Di en regard duquel ce chiffre est positionné.

Par exemple, la signature "889588" a pour référence de temporalité associée la date T3 du document D3. Dans cette réalisation, cela indique que cette signature est apparue pour la première fois dans le document D3 parmi l'ensemble des documents D1 à D18.

La présence du chiffre "2" en regard d'une signature Si indique la présence de cette signature Si également parmi les signatures générées pour le document Di en regard de ce chiffre "2".

Par exemple, la signature "889588" a été générée pour les documents D4, D5 ou encore D6, D7 et D8...

Ici, la mémoire 3 maintient une relation non seulement entre chaque valeur de signature Si et sa référence de temporalité Ri, mais encore une relation entre cette valeur de signature Si et la date Ti de chacun des documents Di pour lesquels cette valeur de signature Si a été générée. Autrement dit, à chaque signature Si sont associées une référence de temporalité Ri et une ou plusieurs dates de présence.

Dans le cas de fichiers de type source, les documents Di de la figure 9 peuvent être vus comme représentant chacun une version d'un projet en cours de développement. Dans ce cas, la référence de temporalité Ri correspond sensiblement à une date d'apparition d'un élément de code source dans le projet en question.

Ceci peut permettre entre autres choses d'identifier une contribution au développement du projet. Dans le cas où une ou plusieurs personnes, physiques ou morales, peuvent être rattachées au document Di dont la date associée vaut référence de temporalité pour une valeur de signature Si particulière, il est possible de quantifier la contribution de ces personnes dans le développement, en particulier par rapport à des personnes rattachées à des document Di ne constituant la référence de temporalité d'aucune valeur de signature de l'empreinte globale.

Bien sûr, il ne s'agit là que d'un élément de quantification, qui peut être complété par d'autres informations, en particulier en vue d'aider à l'attribution de la qualité d'auteur à certains contributeurs et non à d'autres.

Selon une troisième variante du second mode de réalisation, le générateur de signature 5 et l'horodateur 7 sont agencés de manière à coopérer avec un ou plusieurs dispositifs capables d'établir des informations sur des différences et/ou similarités entre des documents.

Par exemple, un tel dispositif peut prendre la forme d'un outil de gestion de version, par exemple de type CVS. Par exemple, un outil de gestion de version travaillant à l'échelle du fichier est capable de déterminer si un fichier appartenant à un ensemble de fichiers constituant un logiciel en cours de développement a ou non été modifié depuis la version précédente.

Lorsqu'une même valeur de signature se retrouve dans deux documents, donc deux versions différentes d'un même projet, il est possible de distinguer si cette valeur de signature est associée à un fichier non modifié entre ces deux versions du projet, ou si la présence de cette signature est associée à un fichier modifié, potentiellement de manière insuffisante vis-à-vis des filtres utilisés pour générer une signature différente.

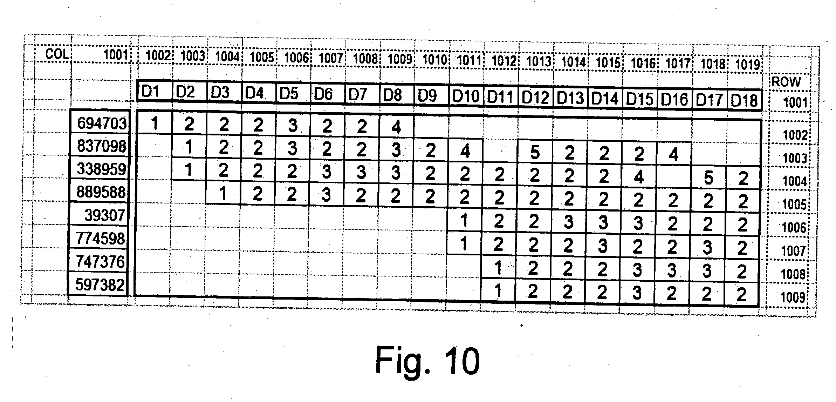

La figure 10 illustre les empreintes temporalisée de documents D1 à D18 établies à l'aide du générateur de signature 5 et de l'horodateur 7 dans la troisième variante du second mode de réalisation.

Un chiffre "3" indique que la signature provient d'un fichier modifié.

Pour le document D5, la présence du chiffre "2" en regard de la signature "338959" indique que le fichier à partir duquel cette signature a été générée n'a pas été modifié depuis la version D4. Au contraire, la présence du chiffre "3" en regard de la signature "694703" indique une modification du fichier à partir duquel cette signature a été générée entre les versions D4 et D5.

Les signatures peuvent être générées selon des niveaux de granularité différents. Par exemple, une signature Si peut être générée pour un fichier et des signatures Si supplémentaires pour chacun des éléments de contenu de ce fichier. Lorsqu'un fichier a subi une modification, la signature Si liée à ce fichier peut être nouvelle et associée à une valeur 2. Les signatures Si correspondant à des éléments de contenu de ce fichier peuvent être identiques (présence de 3 en regard des signatures correspondantes au contenu).

Une telle analyse est autorisée par une interaction avec des outils de gestion version car ces derniers sont capables d'indiquer des éléments divergents entre deux versions.

Étant donné que la mémoire 3 maintient les dates de présence des signatures Si, il est possible de calculer des dates de dernière apparition ou de disparition, indiquées par présence du chiffre "4" dans un encadré carré.

Par exemple, la signature "837098" test absente du document D11 et apparaît pour la dernière fois dans le document D10. Elle réapparaît dans le document D12. Dans cette variante de réalisation, on a choisi d'indiquer de manière différente la réapparition d'une signature Si dans l'ensemble de documents Di (présence d'un chiffre "5"). C'est le cas par exemple pour la signature "837098" dans le document D12.

Les documents D1 et D18 font partie d'un jeu de documents, par exemple les différentes versions d'un même projet, ou d'un même document.

Les empreintes temporalisées permettent de déterminer des dépendances entre documents. Par dépendance, on entend ici la reprise d'une partie du contenu d'un document dans un autre, y compris dans le cas de modifications annulées par les différents filtres appliqués.

Cette gestion temporelle de documents, visant notamment à établir leur dépendance mutuelle, est sensible aux fonctions filtres appliquées et aux fonctions de hashage utilisées.

Dans la mesure où des signatures différentes, en valeur et potentiellement en nombre, seront générées pour un même document Di du fait de l'emploi de fonctions filtre, de morcellement, et de hashage différentes, il apparaît a fortiori difficile de comparer des empreintes de documents générées suivant des fonctions filtre, de hashage et de morcellement différentes.

Or ces fonctions sont par nature amenées à évoluer :
- pour en maintenir un niveau d'irréversibilité convenable (des fonctions de hashage peuvent être "crackées")
- pour en améliorer régulièrement la robustesse, et/ou
- par l'absence d'existence d'un standard, qui entraîne que des empreintes générées chez un tiers peuvent être différentes des empreintes générées chez soi.

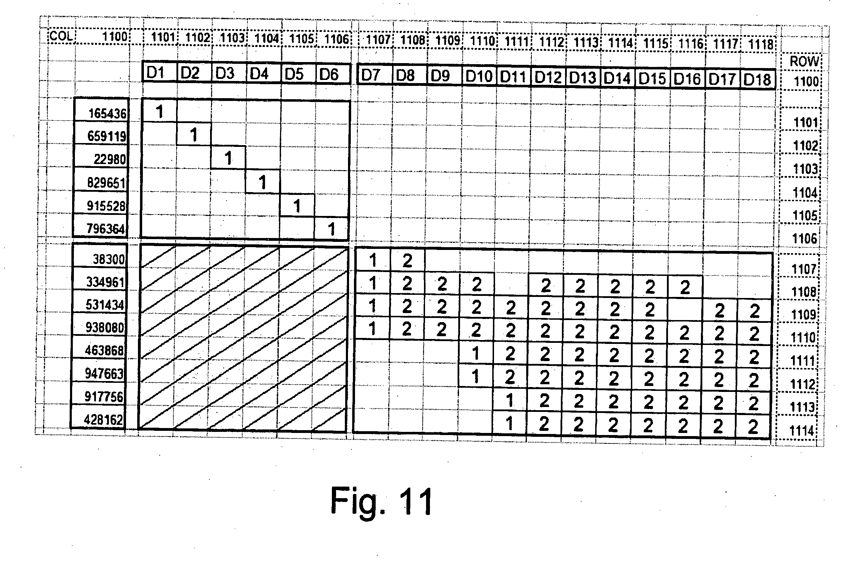

Sur la figure 11, les colonnes COL1101 à COL1106 concernent des documents D1 à D6 soumis à des dates auxquelles la fonction de signature fonctionnait avec le filtre F1 et la fonction de hashage H1. Ces empreintes pourraient également correspondre à des dépôts réalisés auprès de tiers horodateurs.

Les colonnes COL1107 à COL1118 concernent une empreinte temporelle générée à l'aide des filtres F2 et F3 et de la fonction de hashage H2 pour des documents D7 à D18.

Dans la partie rayée, (COL1101 à COL1106, ROW1107 à ROW1109) il n'est pas possible de comparer les documents D1 à D6 aux documents D7 à D18 : chacune des signatures générées pour les documents D1 à D6 diffère des signatures générées pour les documents D7 à D18, sans qu'il soit possible d'attribuer une telle différence de signatures à des différences de contenu plutôt qu'à l'emploi de fonctions de hashage et de filtre différentes.

Plus particulièrement, il n'est pas possible d'attribuer aux signatures générées pour les documents D7 à D18 une référence de temporalité Ri antérieure à la date T7 associée au document D7, du fait des différences de traitement entre les documents D1 à D6 et les documents D7 à D18. Qr, le contenu ayant conduit à la génération de l'ensemble des signatures pour les documents D7 à D18 peut avoir été présent dans les documents D1 à D6.

Cet inconvénient est en outre illustré par la présence du chiffre 1 en regard de chacune des signatures générées à partir du document D7.

Le contrôleur 11 est ici agencé d'une manière avantageuse qui permet de surmonter cet inconvénient.

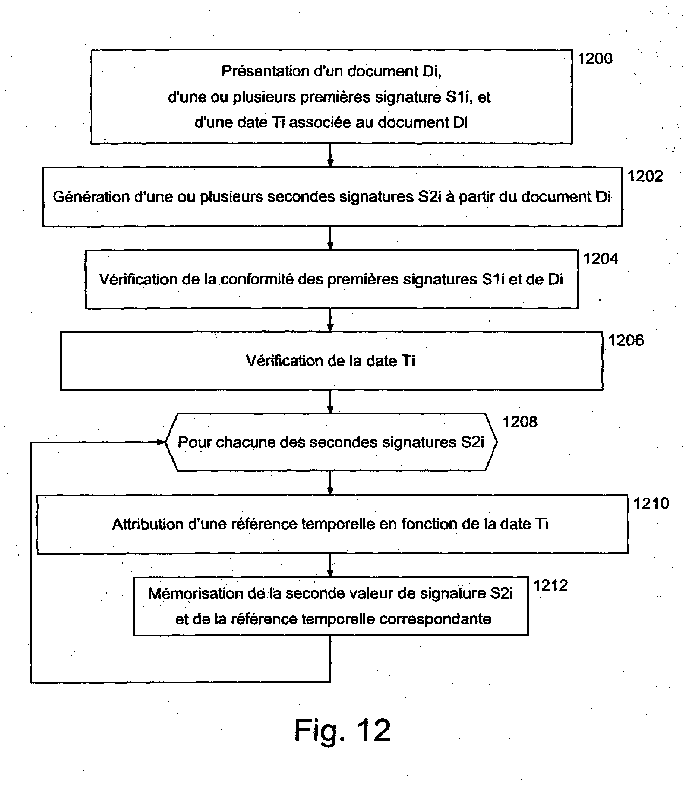

La figure 12 illustre la manière dont le contrôleur 11 est agencé.

Dans une étape 1200, le contrôleur 9 reçoit :
- un document Di,
- une empreinte du document Di constituée d'une ou plusieurs signatures S1i, ou premières signatures, établies à l'aide d'un premier filtre et d'une première fonction de hashage, et
- une date Ti associée au document Di.

L'empreinte du document Di peut provenir du générateur de signatures 5 du dispositif 1 agencé avec les premières fonctions de hashage H1 et de filtre F1.

L'empreinte du document Di peut également provenir d'un dispositif extérieur, tel qu'un serveur de stockage de fichiers sources par exemple.

Dans une étape 1202, le contrôleur 11 appelle le générateur de signatures 5 pour l'établissement d'une ou plusieurs signatures S2i, ou secondes signatures, partir du document Di. Ces secondes signatures S2i sont établies conformément à une ou plusieurs secondes fonctions filtre et de hashage, par exemple les fonctions F2, F3 et H2 précédemment décrites.

Dans une étape 1204, le contrôleur 11 présente l'ensemble des premières signatures S1i au vérificateur de signatures 9 pour vérifier la conformité de ces premières signatures S1i au document Di.

Le vérificateur de signatures 9 peut être agencé de manière à vérifier lui-même ladite conformité. Par exemple, le vérificateur de signatures 9 peut mettre en oeuvre les premières fonctions filtre F1 et de hashage H1 sur le document Di. Pour ce faire, le vérificateur de signatures 9 peut appeler le générateur de signatures 5 agencé avec les premières fonctions filtre F1 et de hashage H1.

En général, la vérification de la conformité des premières signatures S1i au document Di par le vérificateur de signatures 9 implique une divulgation des fonctions filtre et de hashage utilisées, par exemple simultanément aux signatures. Dans le cas où ces fonctions font l'objet de standards ou de normes, une référence à ces derniers est néanmoins suffisante.

Le vérificateur de signatures 9 peut également être agencé de manière à faire vérifier ladite conformité par un dispositif annexe, par exemple un organisme tiers. Une divulgation des fonctions filtre et de hashage, lesquelles peuvent constituer des éléments de savoir-faire, est ainsi évitée.

Si les premières signatures S1i sont jugées non conformes au document Di, alors le traitement peut être interrompu.

Dans une étape 1206, le vérificateur de signatures 9 vérifie la pertinence de la date Ti associée au document Di. Si la date Ti est jugée non pertinente, alors le traitement peut être interrompu, ou, en variante, poursuivi en substituant à la date Ti la date actuelle du système.

Dans une étape 1208, le contrôleur 11 présente chacune des secondes signatures S2i au module horodateur 7.

Dans le cas où la date Ti a été jugée pertinente, le module horodateur 7 appelle la fonction d'élection de temporalité avec cette date Ti pour attribution d'une référence de temporalité Ri conformément à une ou plusieurs règles préétablies (étape 1210).

Dans le cas où la date Ti n'est pas pertinente, ou si le document Di à partir duquel les secondes signatures S2i ont été générées n'est pas conforme à la première signature S1i, la fonction d'élection de temporalité ne peut être appelée avec la date Ti.

Cette fonction d'élection de temporalité peut néanmoins être appelée avec la date courante du système ou la date d'enregistrement du document Di dans la mémoire 3. Et cette date peut être établie en tant que référence de temporalité Ri. En option, la seconde signature S2i peut faire l'objet d'une procédure d'horodatage.

Dans une étape 1212, le contrôleur 11 commande l'enregistrement d'une correspondance entre chacune des secondes signatures S2i et la référence de temporalité Ri qui lui a été attribuée dans la mémoire 3. En variante, le contrôleur 11 commande également l'enregistrement d'une correspondance entre chacune des secondes signatures S2i et la date Ti.

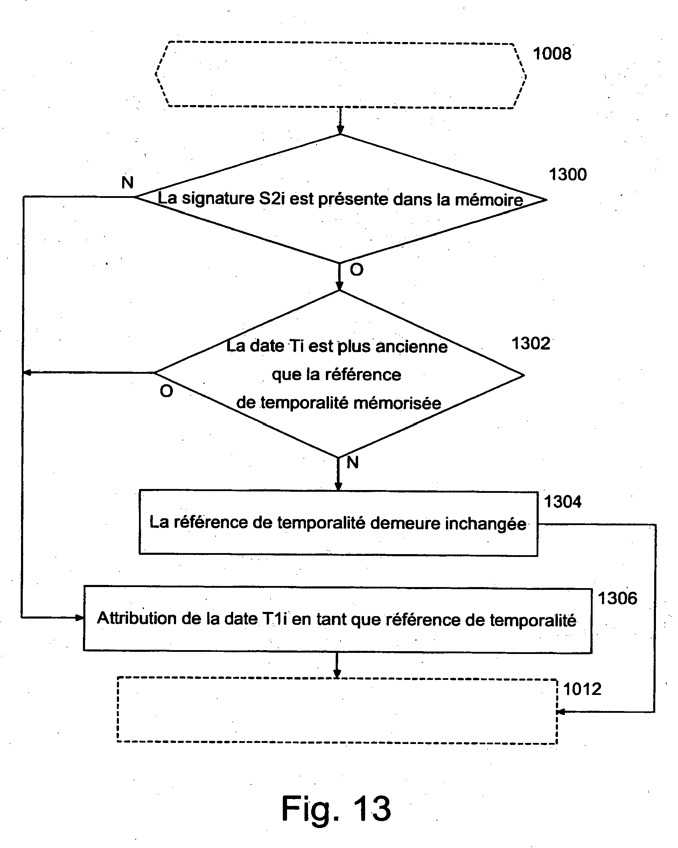

La figure 13 illustre l'attribution d'une référence de temporalité Ri à une seconde signature S2i, selon un mode de réalisation particulier du contrôleur 11.

Dans une étape 1300, le contrôleur 11 vérifie si la signature S2i est présente dans la mémoire 3.

Si oui, alors la fonction d'élection de temporalité est appelée avec la date Ti et la référence de temporalité Ri associée à la seconde signature S2i en question dans la mémoire 3.

Ici, la fonction d'élection de temporalité établit en tant que nouvelle référence de temporalité Ri la plus ancienne de l'actuelle référence de temporalité Ri et de la date Ti.

Autrement dit, on détermine si la date Ti est plus ancienne que la référence de temporalité Ri associée à la valeur de signature S2i en question dans la mémoire 3 (étape 1302).

Si oui, alors la date Ti est établie en tant que référence de temporalité Ri (étape 1306). Sinon, la référence de temporalité Ri demeure inchangée (étape 1304).

Dans le cas où la signature S2i en question est absente de la mémoire 3, alors la date Ti associée au document Di est établie en tant que référence de temporalité (étape 1306).

Dans la variante de réalisation où une correspondance entre une seconde valeur de signature S2i et la date Ti du document Di est mémorisée à l'étape 1012, quelque soit la référence de temporalité Ri associée à cette seconde valeur de signature S2i, la fonction d'élection de temporalité peut être appelée avec la date Ti du document Di actuellement traité et l'ensemble des dates Ti associées en mémoire à cette signature S2i pour une mise à jour des attributs associés à cette signature qui dépendent de la référence de temporalité Ri ou des dates Ti.

Tel est le cas notamment, lorsque le dispositif 1 est couplé à un outil de gestion des différentes versions d'un document, comme expliqué plus haut à la description de la figure 10.

Selon une première variante de réalisation, la vérification de la conformité des premières signatures S1i au document Di est réalisée par régénération des signatures. À partir du document Di, un ensemble de signatures est généré à l'aide des premières fonctions filtre et de hashage. Si l'ensemble des signatures régénérées est identique à l'ensemble des premières signatures S1i, alors ces premières signatures S1i sont jugées conformes au document Di.

Ici, ces deux ensembles sont considérés identiques si chacune des signatures de l'un se retrouve dans l'autre, et réciproquement.

Si les deux ensembles sont identiques, alors la date Ti est jugée pertinente.

Dans le cas où la date Ti est jugée pertinente, l'horodateur 7 peut établir la date Ti en tant que référence temporelle Ri pour chacune des secondes signatures S2i.

Selon une seconde variante de réalisation, l'empreinte reçue à l'étape 1200 comprend une unique signature S1i pour le document Di. Un jeton d'horodatage Ji pour la signature S1i est également reçu.

La vérification de la conformité de la première signature S1i au document Di peut être réalisée par régénération de signature.

Dans le cas où la première signature S1i est conforme au document Di, le contrôleur 11 vérifie la validité du jeton d'horodatage pour la première signature S1i. Cette vérification de validité comprend la vérification de la correspondance du jeton Ji à la première signature S1i. Cette vérification peut également comprendre la vérification de la validité du jeton Ji lui-même, par exemple auprès de l'émetteur de ce jeton. Ces deux vérifications peuvent être réalisées de manière concomitante, grâce à un procédé de clé publique/clé privée attribuées à l'émetteur du jeton.

Si le jeton Ji est jugé valide pour la signature S1i, alors le contrôleur 11 vérifie que la date de ce jeton Ji correspond à la date Ti.

Si la date du jeton Ji correspond à la date Ti, alors cette dernière est jugée pertinente. Dans ce cas, le niveau de confiance qui peut être accordé à la date Ti est similaire au niveau de confiance accordé à l'émetteur du jeton Ji.

Dans certains cas, un faible décalage temporel entre la date du jeton Ji et la date Ti pourra être toléré sans remettre en cause la pertinence de la date Ti. En pratique, des contraintes techniques ne permettent pas de générer le jeton Ji exactement à la date Ti.

Selon une troisième variante de réalisation, l'empreinte reçue à l'étape 1200 comprend un pluralité de premières signatures S1i. Plusieurs jetons d'horodatage Ji sont également reçus.

Le contrôleur 11 vérifie la conformité des premières signatures S1i au document Di, par exemple par régénération de signatures.

Si, les premières signatures S1i sont conformes au document Di, alors le contrôleur 11 vérifie la validité des jetons Ji pour les premières signatures :
- pour chacun des jetons d'horodatage Ji, il doit exister au moins une première signature S1i valablement associée à ce jeton, et
- à chacune des premières signatures S1i doit être valablement associé au moins un jeton Ji valable.

Si les jetons Ji sont valides pour les premières signatures S1i, alors le contrôleur 11 vérifie que la date de chacun des jetons Ji correspond à la date Ti.

Si l'ensemble des dates des jetons Ji correspond à la date Ti, alors cette date Ti est jugée pertinente.

En option, la date Ti peut être jugée pertinente malgré une différence entre certaines dates des jetons Ji et la date Ti. Dans ce cas, un niveau de confiance élevé pourra être accordé à une date Ti qui correspond à l'ensemble des dates des jetons Ji, tandis qu'un niveau de confiance inférieur sera attribué lorsque certaines au moins des dates des jetons différeront de la date Ti. Des niveaux de confiance intermédiaires pourront être attribués en fonction du nombre de jetons Ji dont les dates diffèrent de la date Ti.

Quelque soit la variante de réalisation du contrôleur 11, celui-ci peut être agencé de manière à traiter successivement un ensemble de documents Di.

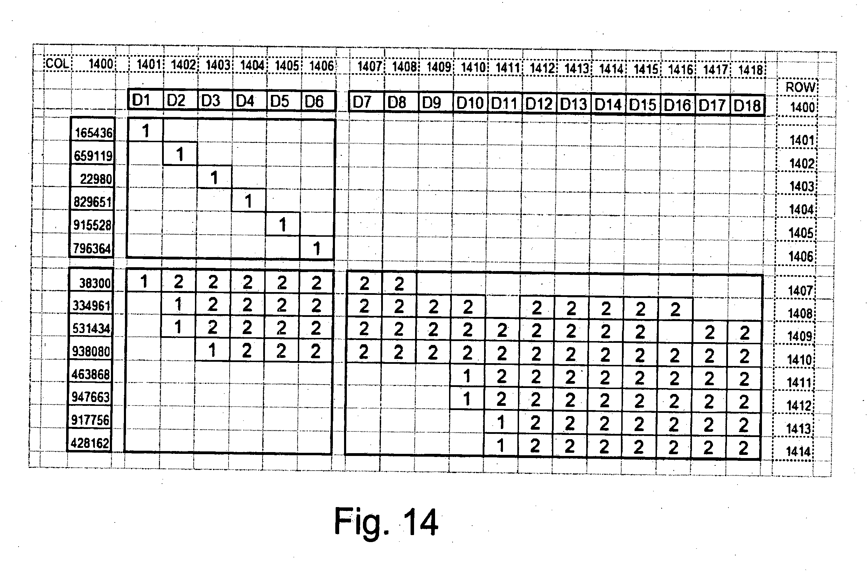

La figure 14 illustre le résultat du traitement du contrôleur 11, conformément à la troisième variante de réalisation de ce contrôleur 11, en combinaison avec le procédé d'attribution de référence de temporalité de la figure 13.

Le générateur de signatures 5 a par exemple opéré sur le document D1 pour lui attribuer en tant qu'unique seconde signature S21 la valeur "38300". Les secondes signatures "38300", "334961" et "531434" ont été générées pour le document D2, et "38300", "334961", "531434" et "938080" pour le document D3.

Les dates T1, T2 et T3 respectivement associées aux premières signatures de ces documents D1, D2 et D3 (voir COL1401;ROW1401, COL1402;ROW1402 et COL1403;ROW1403) ont été jugées pertinentes. La date T1 associée à la première signature "165436" de D1 peut ainsi être attribuée à la seconde signature S21 de D1, et la date T2 associée à la première signature de D2 peut être attribuée aux secondes signatures S22 de D2. Par exemple, la seconde signature "38300" de D2 a pour référence de temporalité la date T1 associée à D1, car cette date T1 est antérieure à la date T2 associée à D2.

Dans la colonne COL1407, les références de temporalité R7 des secondes signatures associées au document D7 visibles sur la figure 13 ont été revues à la lumière du traitement réalisé sur les documents D1 à D6. Les valeurs "1" indiquant la date T7 en tant que référence de temporalité Ri pour les secondes signatures S27 ont été remplacées sur la figure 14 par des valeurs "2" indiquant la date T7 en tant que date de présence uniquement pour ces signatures.

Selon une quatrième variante de réalisation, l'empreinte reçue à l'étape 1200 comprend une pluralité de premières signatures S1i, et, pour chacune de ces premières signatures S1i, une ou plusieurs dates Tj associées à des documents Dj dont l'empreinte comprend cette première signature S1i, les dates Tj étant antérieures à la date Ti. Un jeton d'horodatage Ji est également reçu pour la plus ancienne des dates Tj de chacune des premières signatures S1i. Enfin, un ensemble de documents Dj, comprenant au minimum chacun des documents Dj dont la date Tj est présente dans l'empreinte du document Di, est accessible au contrôleur 11. Les documents Dj peuvent être présents dans la mémoire 3 parce qu'ils ont déjà été traités ou transmis antérieurement ou simultanément à l'étape 1200.

Le contrôleur 11 vérifie la conformité de l'ensemble des premières signatures S1i au document Di, par exemple par régénération de ces premières signatures S1i.

Pour chacune des premières signatures S1i, le contrôleur 11 vérifie que les dates Tj associées sont cohérentes avec les documents Dj antérieurs. Pour chacune des dates Tj, le contrôleur 11 vérifie à partir des documents Dj que la signature S1i en question est effectivement présente dans chacun des documents Dj dont la date Tj est présente dans l'empreinte, et uniquement dans ceux-ci. Le contrôleur 11 vérifie en outre que la date Tj indiquée comme étant la plus ancienne l'est effectivement au regard des documents Dj antérieurs mémorisés. Cette vérification peut comprendre une étape de régénération des empreintes des documents Dj.

Si les dates Tj sont cohérentes avec les documents Dj antérieurs, alors le contrôleur 11 vérifie la validité des jetons d'horodatage Ji. Pour chacun des jetons Ji, le contrôleur 11 vérifie qu'il existe au moins une première signature S1i à laquelle ce jeton Ji est valablement associé. Le contrôleur 11 vérifie ensuite que chacune des premières signatures S1i est valablement associée à un jeton Ji. Le contrôleur 11 établit ainsi un ensemble de jeton Ji valides.

Pour chacune des premières signatures S1i dont la plus ancienne date Tj correspond à la date Ti, le contrôleur 11 vérifie que la date du ou des jetons Ji valablement associés à cette signature S1i correspond à la date Ti.

Pour les autres premières signatures S1i, le contrôleur 11 vérifie que la date du ou des jetons associés est antérieure à la date Ti.

La date Ti est jugée pertinente si toutes les vérifications sont positives.

Le contrôleur 11 peut être agencé de manière à traiter un ensemble de documents Di, par ordre chronologique de leur date Ti. Dans ce cas, les documents Di antérieurement traités sont avantageusement conservés en mémoire pour permettre le traitement du document Di sans retransmission de ces documents Di antérieurs. Un traitement chronologique présente en outre l'avantage que les références temporelles Ri associées aux documents déjà traités ne sont plus susceptibles d'évoluer. Il en résulte des économies de traitement.

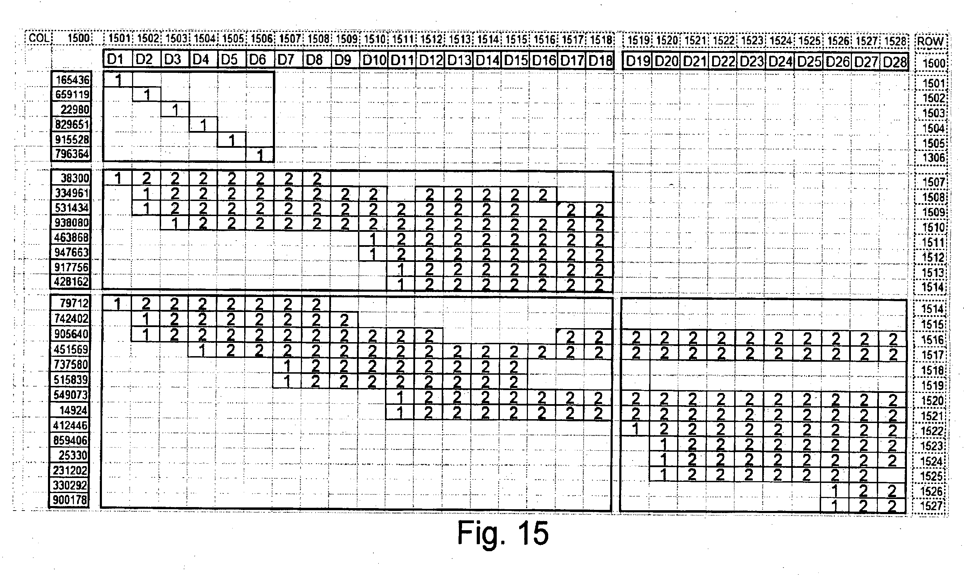

La figure 15 illustre le résultat du traitement du contrôleur 11, conformément à la quatrième variante de réalisation de ce contrôleur 11, en combinaison avec le procédé d'attribution de référence de temporalité de la figure 13.

L'ensemble des documents D1 à D18 sont traités par le contrôleur 11. Sur la figure 15, l'empreinte d'un document Di telle que fournie dans ce mode de réalisation comprend l'ensemble des colonnes correspondant aux document antérieurs (D1 à Di-1) et la colonne du document Di, pour les lignes ROW1507 à ROW1514. Le résultat du traitement est visible dans la zone des colonnes COL1501 à COL1518 et des lignes ROW1507 à ROW1514.

Selon une cinquième variante de réalisation, l'empreinte reçue à l'étape 1200 comprend uniquement des premières signatures S1i nouvellement associées au document Di. Pour chacune de ces premières signatures sont également reçus un ou plusieurs jetons d'horodatage Ji pour cette première signature S1i. Enfin, un ensemble de documents Dj dont la date Tj est antérieure à la date Ti est accessible au contrôleur 11.

Le contrôleur 11 vérifie la conformité de l'ensemble des premières signatures S1i au document Di, par exemple par régénération de ces premières signatures S1i. Cette vérification de conformité se limite ici à vérifier que les premières signatures transmises sont effectivement présentes dans l'empreinte régénérée pour le document Di.

Pour chacune des premières signatures S1i, le contrôleur 11 vérifie que cette première signature S1i est effectivement nouvellement associée au document Di. Autrement dit, le contrôleur 11 vérifie qu'aucune des empreintes correspondant aux documents Dj antérieurs ne comprend cette première signature S1i. Ceci revient à vérifier la cohérence de la date Ti associée à la signature S1i par rapport à l'ensemble des documents Dj antérieurs mémorisés.

Si la date Ti de chacune des premières signatures Si1 est cohérente avec les documents Dj antérieurs, alors le contrôleur 11 vérifie la validité des jetons d'horodatage Ji de manière identique à la quatrième variante de réalisation.

Pour chacune des premières signatures S1i, le contrôleur 11 vérifie que la date du ou des jetons Ji valablement associés à cette signature S1i correspond à la date Ti.

Si l'ensemble des dates associées à ces jetons Ji est identique à Ti, la date Ti est jugée pertinente.

Comme pour la quatrième variante de réalisation, le contrôleur 11 peut ici être agencé de manière à traiter un ensemble de documents Di, par ordre chronologique de leur date Ti, de manière itérative.

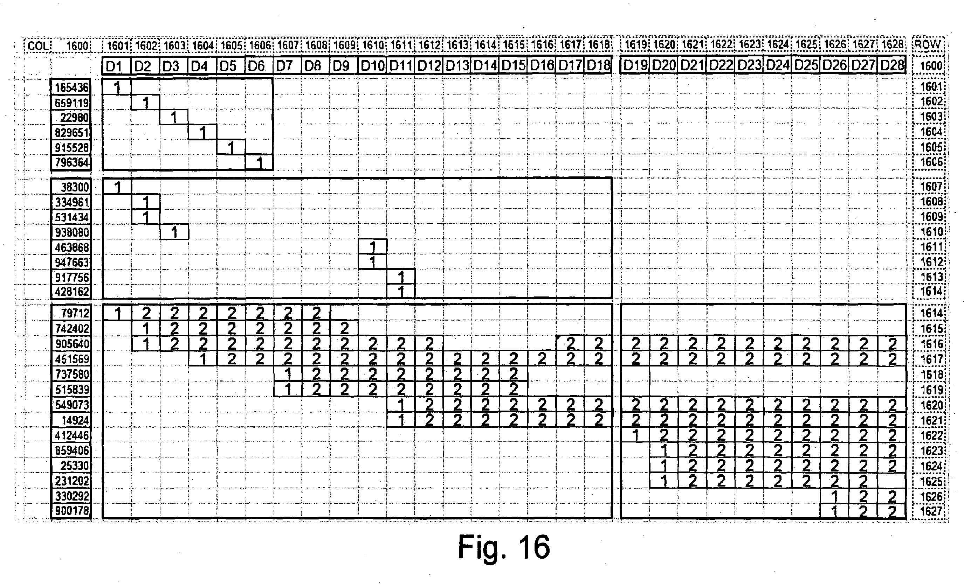

La figure 16 illustre le résultat du traitement du contrôleur 11, conformément à la cinquième variante de réalisation de ce contrôleur 11, en combinaison avec le procédé d'attribution de référence de temporalité de la figure 13.

L'ensemble des documents D1 à D18 sont traités par le contrôleur 11. Sur la figure 16, l'empreinte d'un document Di telle que fournie dans ce mode de réalisation comprend l'ensemble des colonnes correspondant aux document antérieurs (D1 à Di-1) et la colonne du document Di, pour les lignes ROW1607 à ROW1614. Le résultat du traitement est visible dans la zone des colonnes COL1601 à COL1618 et des lignes ROW1607 à ROW1614.

Dans une variante de réalisation du dispositif 1, les premières fonctions filtre et de hashage sont compatibles avec les secondes fonctions filtre et de hashage. On entend par là que lorsque ces fonctions sont appliquées à une même document Di, l'ensemble des secondes signatures S2i comprend certaines au moins des premières signature S1i.

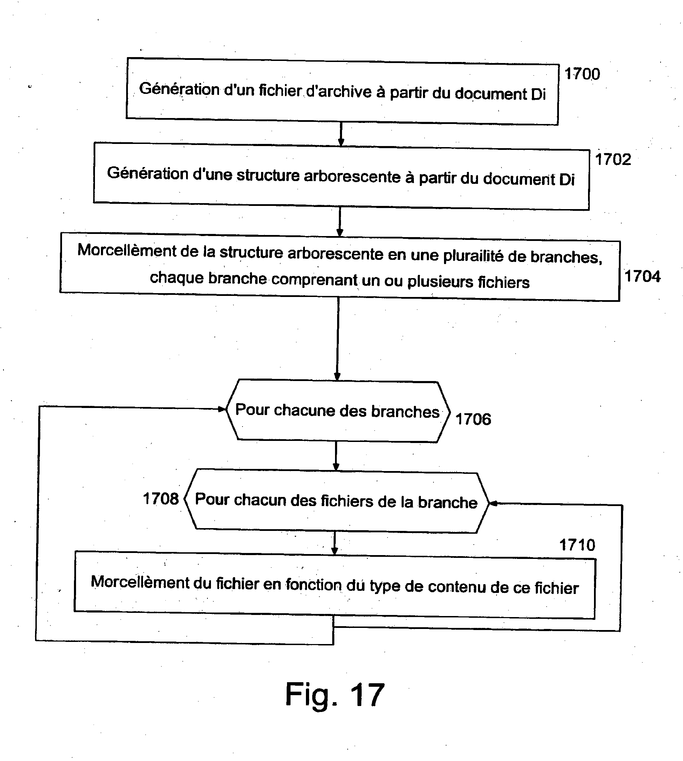

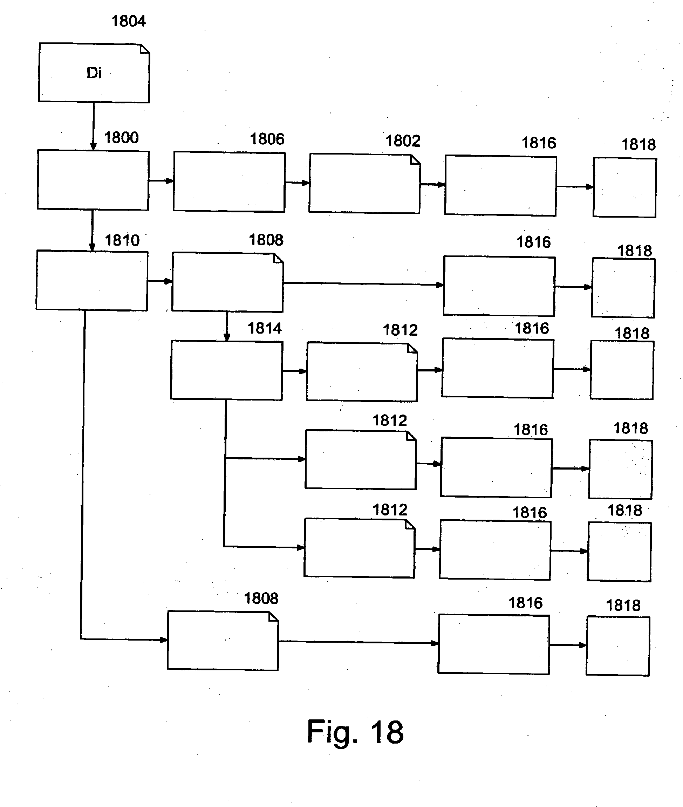

La figure 17 illustre un exemple d'agencement du générateur de signatures 5 dans cette variante de réalisation. Et la figure 18, illustre le résultat du traitement de ce générateur de signatures. Ces figures sont décrites conjointement.

Dans une étape 1700, la fonction de morcellement 1800 du générateur de signatures 5 réalise un fichier informatique 1802 de type archive à partir d'un document Di 1804, lequel document Di peut comprendre plusieurs fichiers informatiques. Différents formats de fichiers d'archive peuvent être employés ici, par exemple les fichiers de type "zip", de type "tar", de type "image iso" ou autres. Le fichier de type archive constitue ainsi un premier morceau généré à partir du document Di. La génération du fichier archive peut faire appel à un générateur d'archive 1806.

Dans une étape 1702, la fonction de morcellement génère une structure arborescente à partir du document Di. Différents critères peuvent être utilisés pour la réalisation de cette structure arborescente. Par exemple, la structure arborescente peut être générée conformément à la structure de stockage informatique du document Di : chaque branche peut correspondre à un répertoire utilisé pour le stockage de fichiers informatique. La structure arborescente peut également différer de cette structure de stockage, des fichiers pouvant alors être créés et répartis entre différentes branches suivant : la partie d'un projet de logiciel en développement auquel ils correspondent, la version du logiciel en développement dans laquelle ils sont apparus, etc.

Dans une étape 1706, la fonction de morcellement génère une pluralité de branches, chaque branche contenant un ou plusieurs fichiers. Chacune des branches correspond à un morceau 1808. Ceci peut être réalisé à l'aide d'un générateur d'arbre 1810

La fonction de morcellement débute une boucle sur chacune de ces branches (étape 1706) et sur chacun des fichiers de la branche en question (étape 1708).

À partir d'un fichier, ou d'une branche, la fonction de morcellement génère une pluralité de morceaux 1812 suivant le type du fichier en question (étape 1710). La fonction de morcellement peut être capable de découper un fichier de type source, en un langage particulier, en éléments significatifs dans ce langage, chacun de ces éléments formant un morceau du document Di. Par exemple, la fonction de morcellement est capable d'identifier pour ce langage des fonctions, des blocs, des données, et/ou encore des structures de données. Dans le cas où le type du fichier est inconnu de la fonction de morcellement, par exemple si le fichier correspond à un langage de programmation que la fonction de morcellement ne sait pas traiter, le fichier est laissé en l'état. La partie de la fonction de morcellement utilisée pour cette opération est représentée par le bloc 1814.

Le générateur de signature appliqué une première fonction de hashage 1816 à chacun des morceaux générés par la fonction de morcellement. L'empreinte générée pour le document Di comprend ainsi des signatures Si à chacune desquelles peut être attribué un niveau hiérarchique en fonction du type de l'élément à partir duquel ladite signature a été générée.

Par exemple, la signature S1L1 1818 générée à partir du fichier archive 1802 présente un attribut de niveau 1, tandis que chacune des signatures S1L2 1820 générées à partir d'une branche 1808 présente un attribut de niveau 2 et chacune des signatures S1L3 1822 générées à partir d'un élément significatif 1812 présente un attribut de niveau 3.

Une évolution probable de la fonction de morcellement consiste à la modifier de manière à traiter toujours plus de fichiers de types différents. Par exemple, la fonction de morcellement peut être modifiée de manière à être désormais capable de découper un fichier image. La fonction de morcellement peut en outre être modifiée de manière à découper des fichiers sources en des langages auparavant inconnus.

Autrement dit, une nouvelle fonction de morcellement est créée à chaque fois qu'une telle évolution survient, chaque nouvelle fonction de morcellement conduisant à une nouvelle configuration du générateur de signatures 5 compatible avec la précédentes, au sens exposé plus haut.

Dans cette variante de réalisation, le contrôleur 11 peut être agencé de manière à prendre en compte les attributs hiérarchiques associés aux signatures pour gérer de manière avantageuse la transition entre deux agencements du générateur de signatures 5 compatibles.

Ainsi, selon une sixième variante de réalisation du contrôleur 11, l'empreinte reçue à l'étape 1200 comprend uniquement une première signature S1i de plus haut niveau hiérarchique. Un jeton d'horodatage Ji pour cette première signature de plus haut niveau est encore reçu.

Le contrôleur 11 compare la première signature S1i de plus haut niveau à la seconde signature S2i de plus haut niveau. Ici, il n'est pas nécessaire de générer à nouveau de premières signatures à partir du document Di puisque fonctions de filtre et de hashage utilisées sont compatibles.

Si la première signature S1i de plus haut niveau correspond à la seconde signature S2i de même niveau, alors les premières signatures sont jugées conformes au document Di.

La vérification de la pertinence de la date Ti consiste ici à vérifier le jeton d'horodatage Ji quant à son association à la première signature S1i de plus haut niveau, et quant à sa date, laquelle date doit être identique à la date Ti.

Selon une septième variante de réalisation, la contrôleur 11 est agencé de manière avantageuse pour le cas où le générateur de signatures 5 utilisé pour les premières signatures S1i diffère du générateur de signatures 5 utilisé pour les secondes signatures S21 uniquement par la méthode employée pour la génération des signatures de plus haut niveau.

L'empreinte reçue à l'étape 1200 comprend une pluralité de premières signatures S1i, et, pour chacune de ces signatures présentant un niveau hiérarchique inférieur au plus haut niveau, un jeton d'horodatage Ji.

La vérification de la cohérence entre les premières signatures et le document Di ne nécessite pas une nouvelle générétion des premières signatures. Le contrôleur vérifie que l'ensemble des premières signatures S1i de niveau inférieur se retrouve dans les secondes signatures S2i. Si tel est le cas, les premières signatures sont jugées conformes au document Di.

La vérification de la pertinence de la date Ti consiste ici à vérifier la validité des jetons Ji quant à leur association aux premières signatures et quant à leur date, laquelle doit correspondre à la date Ti.

Selon une huitième variante de réalisation, le générateur de signatures 5 utilisé pour les premières signatures S1i diffère du générateur de signatures 5 utilisé pour les secondes signatures S2i par l'intégration de fonctions filtre et de hashage supplémentaires. Autrement dit, pour un même document Di l'ensemble des premières signatures est contenu dans l'ensemble des secondes signatures. Par conséquent, la vérification de la cohérence des signatures S1i au document Di peut être limitée ici à la vérification de l'inclusion de l'ensemble des premières signatures S1i dans les secondes signatures S2i.

Ceci est avantageux lorsque le générateur de signatures 5 est agencé de manière à intégrer les fonction de filtre et de hashage standardisées, régulièrement, en fonction de l'évolution des standards.

L'invention n'est pas limitée aux modes de réalisation décrits ci-dessus à titre d'exemple uniquement mais englobe l'ensemble des variantes que pourra envisager l'homme de l'art.

En particulier :
- L'invention peut être également décrite sous la forme d'un procédé pour la gestion temporelle de documents numériques du type comprenant les étapes suivantes:
- stocker au moins un document numérique et une empreinte datée respective, ladite empreinte datée définissant une correspondance entre une ou plusieurs premières valeurs de signatures et au moins une valeur de temporalité, ces premières valeurs de signatures étant établies à partir de ce document numérique, conformément à une première méthode de signature,
- établir une ou plusieurs secondes valeurs de signatures respectives à partir du document numérique, conformément à une seconde méthode de signature,
- vérifier la conformité de l'empreinte datée au document numérique selon une ou plusieurs règles prédéterminées,
- dans le cas où le document numérique est conforme à l'empreinte datée, établir une correspondance entre certaines au moins des secondes valeurs de signatures et une valeur-résultat d'une fonction d'élection de temporalité appelée avec au moins la valeur de temporalité du document numérique afin de former une nouvelle empreinte datée comprenant de secondes valeurs de signatures.
   En option, ce procédé comprend une ou plusieurs des étapes suivantes :
   - associer une référence de temporalité dans l'empreinte datée à chaque valeur de signature, en tant que valeur-résultat de la fonction d'élection de temporalité.
   - appeler pour certaines au moins des valeurs de signatures la fonction d'élection de temporalité avec la valeur de temporalité de l'empreinte dudit document numérique et des valeurs de temporalité d'empreintes de documents numériques supplémentaires comprenant ladite valeur de signature.
   - établir ladite référence de temporalité au moins sur la base d'un critère d'antériorité des valeurs de temporalité avec lesquelles la fonction d'élection de temporalité a été appelée.
   - faire générer un ensemble de troisièmes signatures conformément à une troisième méthode de signature, comparer l'ensemble des troisièmes signatures à l'ensemble des premières signatures de l'empreinte datée, et décider de ladite conformité sur la base du résultat de cette comparaison.
   - décider de ladite conformité en cas d'identité de l'ensemble des troisièmes signatures et de l'ensemble des premières valeurs de signatures.
   - morceler le document numérique et générer une première signature à partir de chacun desdits morceaux, associer un niveau de morcellement à chacune des premières valeurs de signatures en fonction du morceau à la base de la génération de cette première signature.
   - vérifier la présence dans l'ensemble de troisièmes valeurs de premières valeurs de signatures associées à un niveau de morcellement donné, et décider de ladite conformité sur la base du résultat de cette vérification.
   - ladite troisième méthode de signature comprenant une pluralité de méthodes de signatures, vérifier que l'ensemble des premières signatures est compris dans l'ensemble des troisièmes signatures, et et décider de ladite conformité sur la base du résultat de cette vérification.
   - comparer la valeur de temporalité de l'empreinte datée à une valeur de date associée à un ou plusieurs éléments de certification associés à une ou plusieurs premières valeurs de signatures et décider de ladite conformité sur la base du résultat de cette comparaison.
   - vérifier l'identité de la valeur de temporalité de l'empreinte datée et d'une valeur de date associée à un ou plusieurs éléments de certification associés à une ou plusieurs premières valeurs de signatures et décider de ladite conformité sur la base du résultat de cette vérification.
   - associer une pluralité de valeurs de temporalités à chacune des premières valeurs de signatures dans l'empreinte datée, chacune de ces valeurs de temporalités correspondant à une empreinte d'un document numérique supplémentaire comprenant cette première valeur de signature, vérifier la conformité de ces valeurs de temporalité à des documents numériques supplémentaires décider de la conformité de l'empreinte datée au document numérique sur la base du résultat de cette vérification.
   - établir une indication d'une valeur de temporalité la plus ancienne parmi une pluralité de valeurs de temporalité associées à chacune des premières valeurs de signature dans l'empreinte.
   - coopérer avec un dispositif extérieur de certification pour la vérification de la conformité de l'empreinte datée au document numérique.
   - appliquer ledit procédé à une pluralité de documents de manière itérative, appeler à chaque fois la fonction d'élection de temporalité avec en outre certaines au moins des valeurs-résultats obtenues lors de l'application précédente.
- L'invention permet de créer des bibliothèques d'empeintes temporalisées destinées à être utilisées dans la comparaison de documents, y compris futurs. La faible taille mémoire consommée par le stockage d'une empreinte, en comparaison du stockage d'un ou plusieurs documents, rend possible la comparaison d'un grand nombre de documents et rend surtout cette comparaison très rapide.
- L'invention rend en outre le stockage de ces empreintes compatible avec les évolutions susceptibles de survenir dans les méthodes utilisées pour la génération des signatures. Ceci permet de réaliser une bibliothèque capable de travailler sur de longues périodes de temps.
- Les différents modes de réalisation de chacun des éléments du dispositif selon l'invention peuvent être combinés, en particulier en ce qui concerne le générateur de signatures 5.

## Revendications

1. Dispositif informatique de gestion temporelle de documents numériques du type comprenant :
- une mémoire (3) capable de stocker au moins un document numérique et une empreinte datée respective, ladite empreinte datée définissant une correspondance entre une ou plusieurs premières signatures et au moins une valeur de temporalité, ces premières signatures étant établies à partir de ce document numérique, conformément à une première méthode de signature,
- un générateur de signatures (5) capable, sur présentation d'un contenu de document, d'établir une ou plusieurs secondes signatures respectives, conformément à une seconde méthode de signature,
- un horodateur (7), comprenant une fonction d'élection de temporalité, capable d'établir une correspondance entre une ou plusieurs signatures et une valeur-résultat de la fonction d'élection de temporalité,
- un vérificateur de signatures (9) capable, sur présentation d'un contenu de document numérique et d'une empreinte datée, d'en vérifier la conformité mutuelle selon une ou plusieurs règles prédéterminées,
- un superviseur (11) capable, sur présentation du document numérique et de son empreinte datée, de réaliser le traitement suivant:
- faire opérer le générateur de signatures (5) sur le document numérique pour obtenir une ou plusieurs secondes signatures,
- faire opérer le vérificateur de signatures (9) sur le document numérique et l'empreinte datée, et,
- dans le cas où le document numérique est conforme à l'empreinte datée, faire opérer l'horodateur (7) avec au moins la valeur de temporalité du document numérique et certaines au moins des secondes signatures afin de former une nouvelle empreinte datée comprenant de secondes signatures.

2. Dispositif selon la revendication 1, dans lequel l'horodateur (7) est agencé de manière à associer à chaque signature une référence de temporalité respective dans l'empreinte datée, en tant que valeur-résultat de la fonction d'élection de temporalité.

3. Dispositif selon l'une des revendications 1 et 2, dans lequel l'horodateur (7) est capable d'appeler pour certaines au moins des signatures la fonction d'élection de temporalité avec la valeur de temporalité de l'empreinte dudit document numérique et des valeurs de temporalité d'empreintes de documents numériques supplémentaires comprenant ladite signature.

4. Dispositif selon la revendication 3, dans lequel la fonction d'élection de temporalité est agencée de manière à établir ladite référence de temporalité au moins sur la base d'un critère d'antériorité des valeurs de temporalité avec lesquelles la fonction d'élection de temporalité a été appelée.

5. Dispositif selon l'une des revendications précédentes, dans lequel le vérificateur de signatures (9) est capable de faire générer un ensemble de troisièmes signatures conformément à une troisième méthode de signature, et dans lequel au moins l'une desdites règles prédéterminées porte sur le résultat d'une comparaison de l'ensemble des troisièmes signatures à l'ensemble des premières signatures de l'empreinte datée.

6. Dispositif selon la revendication 5, dans lequel ladite troisième méthode de signature comprend une pluralité de méthodes de signatures.

7. Dispositif selon l'une des revendications 5 et 6, dans lequel l'une desdites règles prédéterminées porte sur le fait que l'ensemble des premières signatures est compris dans l'ensemble des troisièmes signatures.

8. Dispositif selon l'une des revendications 5 à 7, dans lequel le générateur de signatures est agencé de manière à générer l'ensemble des troisièmes signatures à partir dudit document numérique.

9. Dispositif selon l'une des revendications 5 à 8, dans lequel au moins l'une desdites règles prédéterminées porte sur l'identité de l'ensemble des troisièmes signatures et de l'ensemble des premières signatures.

10. Dispositif selon l'une des revendications précédentes, dans lequel la première méthode de signature comprend un morcellement du document numérique et la génération d'une première signature à partir de chacun desdits morceaux, et dans lequel chacune des premières signatures est associée à un niveau de morcellement du morceau à la base de la génération de cette première signature.

11. Dispositif selon la revendication 10 rattachée à l'une des revendications 5 à 9, dans lequel l'une desdites règles prédéterminées porte sur la présence de premières signatures associées à un niveau de morcellement donné dans l'ensemble des troisièmes signatures.

12. Dispositif selon l'une des revendications précédentes, dans lequel l'une desdites règles prédéterminées porte sur une comparaison de la valeur de temporalité de l'empreinte datée à une valeur de date associée à un ou plusieurs éléments de certification associés à une ou plusieurs premières signatures.

13. Dispositif selon la revendication 12, dans lequel l'une desdites règles prédéterminées porte sur l'identité de la valeur de temporalité de l'empreinte datée à une valeur de date associée à un ou plusieurs éléments de certification associés à une ou plusieurs premières signatures

14. Dispositif selon l'une des revendications précédentes, dans lequel chacune des premières signatures est associée dans l'empreinte datée à une pluralité de valeurs de temporalités, chacune de ces valeurs de temporalités correspondant à une empreinte d'un document numérique supplémentaire comprenant cette première signature, et dans lequel le vérificateur de signatures est agencé de manière à vérifier la conformité de ces valeurs de temporalité à des documents numériques supplémentaires.

15. Dispositif selon l'une des revendications précédentes, dans lequel l'empreinte comprend, pour chacune des premières signatures, une indication d'une valeur de temporalité la plus ancienne parmi une pluralité de valeurs de temporalité associées à cette première signature.

16. Dispositif selon l'une des revendications précédentes, dans lequel le vérificateur de signatures est capable de coopérer avec un dispositif extérieur de certification pour la vérification de la conformité de l'empreinte datée au document numérique.

17. Dispositif selon l'une des revendications précédentes, dans lequel le superviseur est agencé de manière à réaliser ledit traitement sur une pluralité de documents de manière itérative, l'horodateur étant à chaque fois capable d'appeler la fonction d'élection de temporalité avec en outre certaines au moins des valeurs-résultats obtenues lors du traitement précédent.

## Patentansprüche

1. Computereinrichtung zur Zeitverwaltung von digitalen Dokumenten, der Art, die aufweist:
- einen Speicher (3), der in der Lage ist, mindestens eine digitales Dokument und einen jeweiligen datierten Abdruck zu speichern, wobei der datierte Abdruck eine Übereinstimmung zwischen einer oder mehreren ersten Signatur/en und mindestens einem Temporalitätswert definiert, wobei diese ersten Signaturen aus diesem digitalen Dokument entsprechend einem ersten Signaturverfahren hergestellt werden,
- einen Signaturengenerator (5), der in der Lage ist, auf die Vorlage eines Dokumentinhalts hin, eine oder mehrere jeweilige zweite Signatur/en entsprechend einem zweiten Signaturverfahren herzustellen,
- einen Zeitstempelgeber (7) mit einer Temporalitätsauswahlfunktion, der in der Lage ist, eine Übereinstimmung zwischen einer oder mehreren Signatur/en und einem Ergebnis/Wert der Temporalitätsauswahlfunktion herzustellen,
- einen Signaturenprüfer (9), der in der Lage ist, auf die Vorlage eines Inhalts des digitalen Dokuments und eines datierten Abdrucks hin, deren gegenseitige Übereinstimmung nach einer oder mehreren vorbestimmten Regel/n zu prüfen,
- eine Überwacher (11), der in der Lage ist, auf die Vorlage des digitalen Dokuments und seines datierten Abdrucks hin, die folgende Verarbeitung durchzuführen:
- den Signaturengenerator (5) auf das digitale Dokument einwirken zu lassen, um eine oder mehrere zweite Signatur/en zu erhalten,
- den Signaturenprüfer (9) auf das digitale Dokument und den datierten Abdruck einwirken zu lassen, und
- im Falle, dass das digitale Dokument mit dem datierten Abdruck übereinstimmt, den Zeitstempelgeber (7) mit mindestens einem Temporalitätswert des digitalen Dokuments und zumindest einigen der zweiten Signaturen arbeiten zu lassen, um einen neuen datierten Abdruck herzustellen, der die zweiten Signaturen umfasst.

2. Einrichtung nach Anspruch 1, wobei der Zeitstempelgeber (7) so eingerichtet ist, dass er jeder Signatur als Ergebnis/Wert der Temporalitätsauswahlfunktion einen jeweiligen Temporalitätsbezug im datierten Abdruck zuordnet.

3. Einrichtung nach einem der Ansprüche 1 und 2, wobei der Zeitstempelgeber (7) in der Lage ist, für zumindest einige der Signaturen die Temporalitätsauswahlfunktion mit dem Temporalitätswert des Abdrucks des digitalen Dokuments und Temporalitätswerte von Abdrucken zusätzlicher, diese Signatur enthaltender digitaler Dokumente aufzurufen.

4. Einrichtung nach Anspruch 3, wobei die Temporalitätsauswahlfunktion so eingerichtet ist, dass der Temporalitätsbezug zumindest auf Grundlage eines Prioritätskriteriums der Temporalitätswerte hergestellt wird, mit denen die Temporalitätsauswahlfunktion aufgerufen wurde.

5. Einrichtung nach einem der vorhergehenden Ansprüche, wobei der Signaturenprüfer (9) in der Lage ist, eine Gruppe dritter Signaturen entsprechend einem dritten Signaturverfahren zu generieren, und wobei sich mindestens eine der vorbestimmten Regeln auf das Ergebnis eines Vergleichs der Gruppe der dritten Signaturen mit der Gruppe der ersten Signaturen des datierten Abdrucks bezieht.

6. Einrichtung nach Anspruch 5, wobei das dritte Signaturverfahren mehrere Signaturenverfahren umfasst.

7. Einrichtung nach einem der Ansprüche 5 und 6, wobei sich eine der vorbestimmten Regeln darauf bezieht, dass die Gruppe der ersten Signaturen in der Gruppe der dritten Signaturen enthalten ist.

8. Einrichtung nach einem der Ansprüche 5 bis 7, wobei der Signaturengenerator so eingerichtet ist, dass er die Gruppe der dritten Signaturen aus dem digitalen Dokument herstellt.

9. Einrichtung nach einem der Ansprüche 5 bis 8, wobei sich mindestens eine der vorbestimmten Regeln auf die Identität der Gruppe der dritten Signaturen und der Gruppe der ersten Signaturen bezieht.

10. Einrichtung nach einem der vorhergehenden Ansprüche, wobei das erste Signaturverfahren eine Fragmentierung des digitalen Dokuments und die Generierung einer ersten Signatur aus jedem der Fragmente umfasst, und wobei jede der ersten Signaturen einer Fragmentierungsebene des Fragments zugeordnet ist, das der Generierung dieser ersten Signatur zugrunde liegt.

11. Einrichtung nach Anspruch 10 in Verbindung mit einem der Ansprüche 5 bis 9, wobei sich eine der vorbestimmten Regeln auf das Vorhandensein erster Signaturen bezieht, die einer bestimmten Fragmentierungsebene in der Gruppe der dritten Signaturen zugeordnet sind.

12. Einrichtung nach einem der vorhergehenden Ansprüche, wobei sich eine der vorbestimmten Regeln auf einen Vergleich des Temporalitätswerts des datierten Abdrucks mit einem Datumswert bezieht, der einem oder mehreren Zertifizierungselement/en zugeordnet ist, das/die einer oder mehreren ersten Signatur/en zugeordnet ist/sind.

13. Einrichtung nach Anspruch 12, wobei sich eine der vorbestimmten Regeln auf die Identität des Temporalitätswerts des datierten Abdrucks mit einem Datumswert bezieht, der einem oder mehreren Zertifizierungselement/en zugeordnet ist, das/die einer oder mehreren ersten Signatur/en zugeordnet ist/sind.

14. Einrichtung nach einem der vorhergehenden Ansprüche, wobei jeder der ersten Signaturen im datierten Abdruck mehrere Temporalitätswerte zugeordnet sind, wobei jeder dieser Temporalitätswerte einem Abdruck eines diese erste Signatur enthaltenden, zusätzlichen digitalen Dokument entspricht, und wobei der Signaturenprüfer so eingerichtet ist, dass er die Übereinstimmung dieser Temporalitätswerte mit zusätzlichen digitalen Dokumenten prüft.

15. Einrichtung nach einem der vorhergehenden Ansprüche, wobei der Abdruck für jede der ersten Signaturen eine Angabe eines ältesten Temporalitätswerts unter mehreren Temporalitätswerten enthält, die dieser ersten Signatur zugeordnet sind.

16. Einrichtung nach einem der vorhergehenden Ansprüche, wobei der Signaturenprüfer in der Lage ist, mit einer externen Zertifizierungseinrichtung zur Prüfung der Übereinstimmung des datierten Abdrucks mit dem digitalen Dokument zusammenzuwirken.

17. Einrichtung nach einem der vorhergehenden Ansprüche, wobei der Überwacher so eingerichtet ist, dass er die Verarbeitung an mehreren Dokumenten auf iterative Weise durchführt, wobei der Zeitstempelgeber bei jedem Mal in der Lage ist, die Temporalitätsauswahlfunktion mit außerdem zumindest einigen der bei der vorherigen Verarbeitung erhaltenen Ergebnisse/Werte aufzurufen.

## Claims

1. Computer device for the time-based management of digital documents, of the type comprising:
- a memory (3) capable of storing at least one digital document and a respective date stamp, said date stamp defining a correspondence between one or more first signatures and at least one time value, the first signatures being established from the digital document according to a first signature method,
- a signature generator (5) capable, when presented with a document content, of establishing one or more respective second signatures according to a second signature method,
- a time stamper (7), including a time election function, capable of establishing a correspondence between one or more signatures and a value-result of the time election function,
- a signature verifier (9) capable, when presented with a digital document content and a date stamp, of verifying that they match according to one or more predetermined rules,
- a supervisor (11) capable, when presented with the digital document and its date stamp, of carrying out the following operations:
- effecting operation of the signature generator (5) on the digital document in order to obtain one or more second signatures,
- effecting operation of the signature verifier (9) on the digital document and the date stamp, and
- in the case where the digital document matches the date stamp, effecting operation of the time stamper (7) with at least the time value of the digital document and at least some of the second signatures in order to form a new date stamp including second signatures.

2. Device according to claim 1, wherein the time stamper (7) is arranged to associate with each signature a respective time reference in the date stamp, as the value-result of the time election function.

3. Device according to either claim 1 or claim 2, wherein the time stamper (7) is capable of calling, for at least some of the signatures, the time election function with the time value of the stamp of said digital document and time values of stamps of additional digital documents including said signature.

4. Device according to claim 3, wherein the time election function is arranged to establish said time reference at least on the basis of a criterion of anteriority of the time values with which the time election function has been called.

5. Device according to any one of the preceding claims, wherein the signature verifier (9) is capable of generating a set of third signatures according to a third signature method, and wherein at least one of said predetermined rules relates to the result of a comparison of the set of third signatures with the set of first signatures of the time stamp.

6. Device according to claim 5, wherein said third signature method includes a plurality of signature methods.

7. Device according to either claim 5 or claim 6, wherein one of said predetermined rules relates to the fact that the set of first signatures are included in the set of third signatures.

8. Device according to any one of claims 5 to 7, wherein the signature generator is arranged to generate the set of third signatures from said digital document.

9. Device according to any one of claims 5 to 8, wherein at least one of said predetermined rules relates to the identity of the set of third signatures and the set of first signatures.

10. Device according to any one of the preceding claims, wherein the first signature method includes fragmentation of the digital document and the generation of a first signature from each of said fragments, and wherein each of the first signatures is associated with a level of fragmentation of the fragment on which the generation of that first signature is based.

11. Device according to claim 10 together with any one of claims 5 to 9, wherein one of said predetermined rules relates to the presence of first signatures associated with a given level of fragmentation in the set of third signatures.

12. Device according to any one of the preceding claims, wherein one of said predetermined rules relates to a comparison of the time value of the date stamp with a date value associated with one or more certification elements associated with one or more first signatures.

13. Device according to claim 12, wherein one of said predetermined rules relates to the identity of the time value of the date stamp and a date value associated with one or more certification elements associated with one or more first signatures.

14. Device according to any one of the preceding claims, wherein each of the first signatures is associated in the date stamp with a plurality of time values, each of those time values corresponding to a stamp of an additional digital document including that first signature, and wherein the signature verifier is arranged to verify that those time values match additional digital documents.

15. Device according to any one of the preceding claims, wherein the stamp includes, for each of the first signatures, an indication of the oldest time value among a plurality of time values associated with that first signature.

16. Device according to any one of the preceding claims, wherein the signature verifier is capable of cooperating with an external certification device in order to verify that the date stamp matches the digital document.

17. Device according to any one of the preceding claims, wherein the supervisor is arranged to carry out said processing on a plurality of documents in a repeated manner, the time stamper being capable each time of calling the time election function with, in addition, at least some of the value-results obtained in the preceding processing.
